Europäisches Patentamt

European Patent Office

Office européen des brevets

(19)

(11) EP 1 046 982 B1

(12) EUROPEAN PATENT SPECIFICATION

(45) Date of publication and mention
of the grant of the patent:
08.10.2003 Bulletin 2003/41

(51) Int Cl.7: **G06F 7/50**, G06F 7/48

(21) Application number: 00202612.8

(22) Date of filing: 08.05.1991

(54) **Programmable logic device**

Programmierbare logische Schaltung

Dispositif logique programmable

(84) Designated Contracting States:
**DE FR GB NL**

(30) Priority: **10.05.1990 US 522336**

(43) Date of publication of application:
**25.10.2000 Bulletin 2000/43**

(62) Document number(s) of the earlier application(s) in
accordance with Art. 76 EPC:
**91304129.9 / 0 456 475**

(73) Proprietor: **Xilinx, Inc.**
**San Jose, California 95124-3400 (US)**

(72) Inventors:
• **Hsieh, Hung-Cheng**
**Sunnyvale, California 94087 (US)**
• **Carter, William S.**
**Santa Clara, California 95051 (US)**
• **Erickson, Charles R.**
**Fremont, California 94536 (US)**
• **Cheung, Edmond Y.**
**San Jose, California 95120 (US)**

(74) Representative: **Gill, David Alan**
**W.P. Thompson & Co.,**
**55 Drury Lane**
**London WC2B 5SQ (GB)**

(56) References cited:
**US-A- 4 706 216      US-A- 4 870 302**
**US-A- 4 897 808**

• **TRILHE ET AL: "WSI - The Challenge of the**
**Future" PROCEEDINGS, FIRST INT. CONF. ON**
**COMPUTER TECHNOLOGY, SYSTEMS AND**
**APPLICATIONS, May 1987 (1987-05), pages**
**531-542, XP002145956 Hamburg**

## Description

This invention relates to programmable or configurable logic devices and to integrated circuit structures including such devices.

One kind of function performed in programmable logic devices is arithmetic. A device such as a configurable logic array of Xilinx, Inc., assignee of the present invention, can perform arithmetic as well as a multitude of other logic functions. Such devices are described in U.S. Patents 4,870,302 and 4 .706.216, which are incorporated herein by reference. Because these devices are intended for general purpose functions, arithmetic is relatively slow and requires a significant amount of silicon area.

Other programmable logic devices, such as the programmable array logic device described in U.S. Patent No. 4,124,899 and user programmable devices described in U.S. Patent No. 4,758,745 also can be programmed to perform arithmetic. These two patents are also incorporated by reference. In these devices the speed of performing arithmetic and other functions which use carry logic is limited by propagation of the carry signal, and the general purpose logic used to implement the carry function is significant.

For understanding how logic devices perform arithmetic, and particularly what causes delay, the following discussion of arithmetic functions will focus on adders. However, the discussion can easily be extended to apply to subtractors, incrementers, decrementers, and accumulators, in addition to other circuits which use a carry-logic.

The following discussion will focus on operation of the middle stages in a multi-bit adder. The least significant bit is a special case because there can be no carry signal to be received from a less significant bit.

The most significant bit is a special case because the carry bit can be used for determining an overflow condition. These two special cases will be discussed in detail later.

In the accompanying drawings:

Fig. 1a is a schematic diagram showing one stage of a conventional full-adder.
Fig. 1b is a schematic symbol for the conventional full-adder stage shown in Fig. la.
Fig. 2 is a schematic diagram of two full adders cascaded together.
Fig. 3 is a schematic diagram of a four-bit adder with look-ahead carry logic.
Fig. 4 is a schematic diagram of a prior art adder.
Fig. 5 is a schematic diagram of a prior art counter.

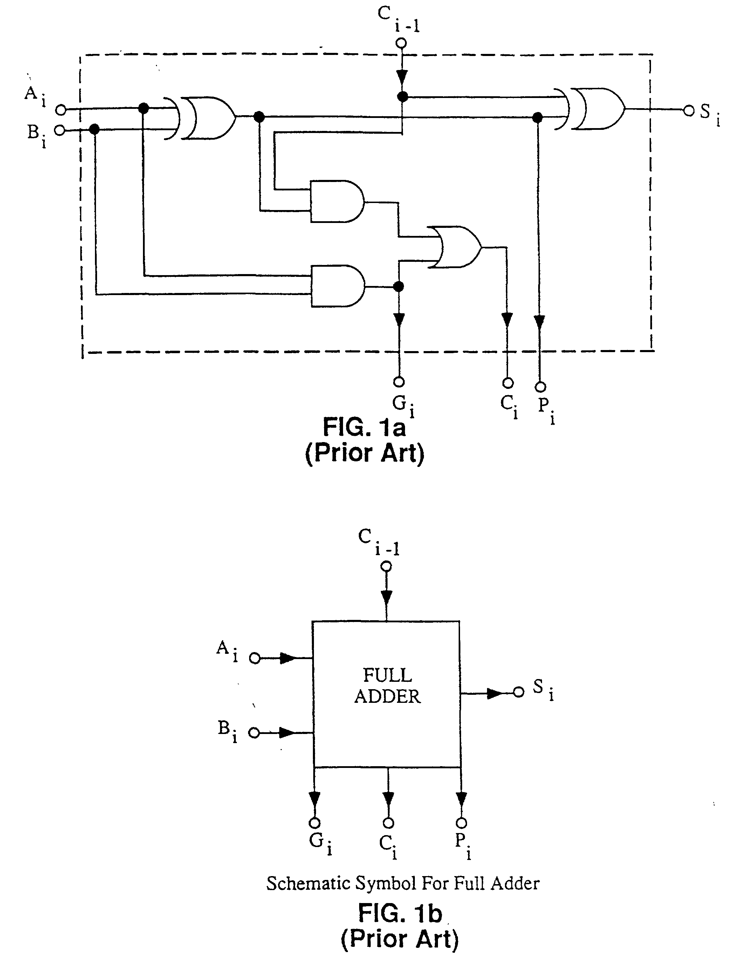

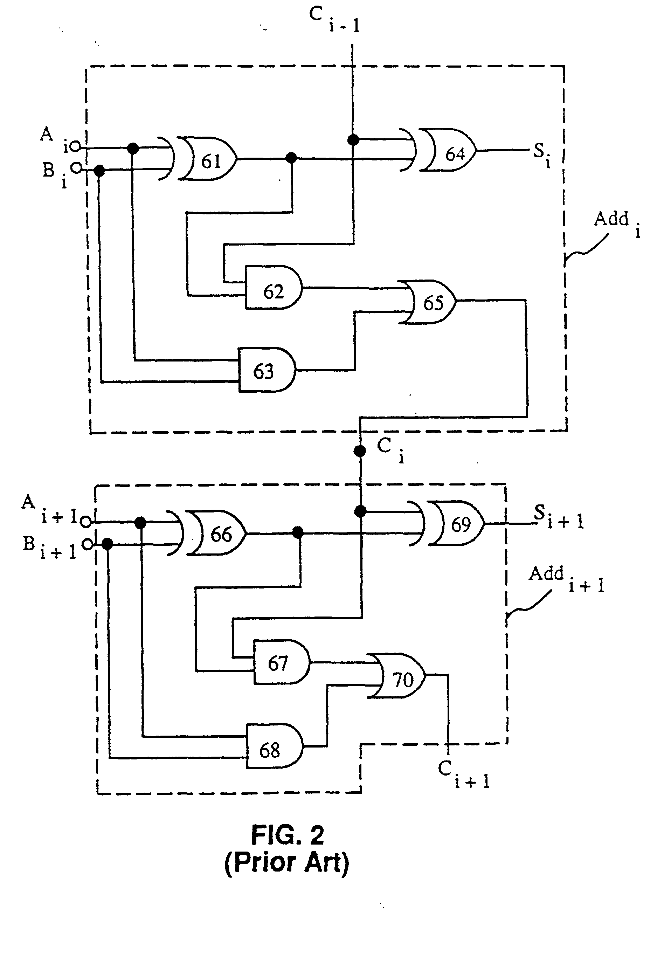

By reference to Figs. 1a, 1b and 2, it will be explained how the speed of a single bit ripple carry adder (Figs. 1a and 1b), and thus a multi-bit ripple carry adder constructed by cascading single bit adders (Fig. 2) is constrained by the speed at which the signal at the carry-in terminal is propagated to the carry-out terminal.

The Boolean logic equations governing the behavior of the single bit adder shown in Fig. 1a are:

$$(1) \qquad S_i = (A_i \oplus B_i) \oplus C_{i-1}$$

$$(2) \qquad C_i = A_i \cdot B_i + (A_i \oplus B_i) \cdot C_{i-1}$$

where

$\oplus$ represents the exclusive-or (XOR) function,
•represents the AND function, and
+ represents the OR function.

Eq.(1) shows that the sum is a function of a carry-in from a less significant bit in addition to the single bits $A_i$ and $B_i$ being added. The ripple carry adder algorithm of Eqs. (1) and (2) shows that the sum for a particular bit cannot be calculated until the carry-out from the previous bit is available. The sum $S_i$ is the output of an XOR gate and cannot be generated until each of its inputs, one of which is the carry-in signal $C_{i-1}$, is available.

Furthermore, the carry-out $C_i$ also cannot be generated until the less significant carry bit $C_{i-1}$ is available. Referring now to Fig. 2, the propagation of the carry signal through successive stages of a ripple carry adder will be explained. AND gate 67 in the second adder stage $Add_{i+1}$ receives one of its inputs from the output of XOR gate 66 after only 1 gate delay. However, assuming that the carry-in signal $C_{i-1}$ is preset (that is, that $Add_i$ is the least significant bit), AND gate 67 could wait an additional 3 gate delays for the effect of $A_i$ and $B_i$ to propagate through gates 61, 62 and 65 before its other input, the carry-out $C_i$ from the less significant bit, has been generated from the carry out of the less significant bit $C_{i-1}$ and the less significant bits $A_i$ and $B_i$ to be added. Furthermore, the carry-out $C_{i+1}$ of the

second bit $Add_{i+1}$ is further delayed through 2 more gates after the carry bit $C_i$ has been generated. That is, combining the inputs on $A_{i+1}$ and $B_{i+1}$ with the carry in signal $C_i$ to generate $C_{i+1}$ requires that $C_i$ propagate through AND gate 67 and OR gate 70. Thus, there will not be a valid carry-in signal $C_{i+1}$ for input to a third stage until 5 gate delays after the application of the input signals $A_i$ and $B_i$. Thus, the speed of the conventional ripple carry adder is constrained by the speed of propagation of the carry signal. The propagation delay of a conventional ripple carry adder is $2n + 1$ gates where n is the number of stages in the multi-bit adder.

Since addition is the foundation of many other important functions and operations, it has been important to the computer industry to devise faster adder circuits by speeding up the carry propagation time. In general, these methods work by trading component density and complexity for carry propagation speed.

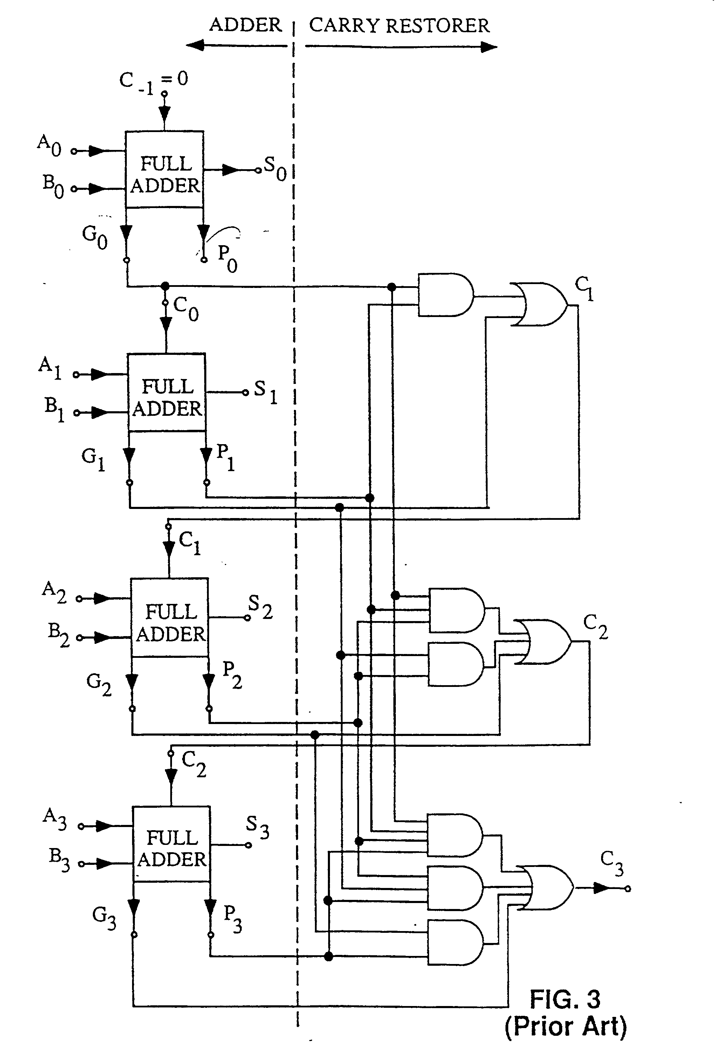

One well-known algorithm which achieves a faster carry propagation speed is called look-ahead carry logic. A circuit for implementing look-ahead carry logic is shown in Fig. 3. Understanding this logic requires the introduction of two new variables:

$$(3) \qquad P_i = A_i \oplus B_i$$

$$(4) \qquad G_i = A_i \bullet B_i$$

The variable P is called "carry propagate" because when P is high, carry-in is propagated to carry-out. The variable G is called "carry generate" because when G is high, a carry-out is generated by the bits being added.

Eqs.(1) and (2) can be rewritten in terms of these new variables:

$$(5) \qquad S_i = P_i \oplus C_{i-1}$$

$$(6) \qquad C_i = G_i + P_i \bullet C_{i-1}$$

With some minor algebraic manipulation, Eq.(6) can be used to write new equations where the carry bit at each level is dependent only on the addends at each level and the least significant carry bit. The following equations are implemented in the four bit adder shown in Fig. 3:

$$(7) \qquad (a)\ C_0 = A_0 B_0 = G_0$$

$$(b)\ C_1 = G_1 + P_1 C_0 = G_1 + P_1 C_0$$

$$(c)\ C_2 = G_2 + P_2 C_1 = G_2 + P_2(G_1 + P_1 C_0)$$

$$= G_2 + P_2 G_1 + P_2 P_1 C_0$$

$$(d)\ C_3 = G_3 + P_3 C_2\ G_3 + P_3(G_2 + P_2 G_1 + P_2 P_1 C_0$$

$$= G_3 + P_3 G_2 + P_3 P_2 G_1 + P_3 P_2 P_1 C_0$$

Each $G_i$ and $P_i$ is a function only of $A_i$ and $B_i$ and not of previous carry values, as can be seen in Eqs. 3 and 4. Second, note in Eq. 7b that $C_1$ is calculated as a function of $G_1$, $P_1$, and $C_0$, and that in Eq. 7c, $C_2$ is calculated as a function of $G_2$, $P_2$ and $C_1$. But since $C_1$ has been solved in terms of $C_0$, $C_2$ can also be solved in terms of $C_0$. Attention to Eq. 7d, and the more general Eq. 6 will reveal that each $C_i$ is a function of several $G_i$'s, $P_i$'s, and $C_0$. As can be seen in Fig. 3, the less significant bit is fed into the next significant bit only for the calculation of the sum, not for the calculation of the carry bit. Since each carry bit is a function of several $G_i$'s, $P_i$'s, and $C_0$, each carry bit is not dependent on the carry-out of any but the least significant bit. Thus the carry propagation delay of the look-ahead carry circuit is independent of the number of bits being added.

Referring still to Fig. 3 and Fig. 1a, the delay from the application of the input signals (A's and B's) to the appearance of a valid signal at the generate outputs ($G_i$'s) and propagate outputs ($P_i$'s) of an adder stage is 1 gate (this can be discerned from Fig. la). The delay added in Fig. 3 by the carry restorer portion of the look ahead carry circuitry is 2 gates, which makes a total of a 3 gate delay from the application of the input signals to the adder until the last carry out bit is available. This relationship is independent of the number of bits being added. For a multi-bit adder circuit, the delay will be significantly less than the delay of a conventional ripple carry adder circuit. However, as the number of stages is increased, the number of components increases significantly. Look ahead carry logic requires many more components than the conventional ripple carry adder requires to implement a stage of a multi-bit adder. This illustrates the idea that faster carry-propagation requires higher component density.

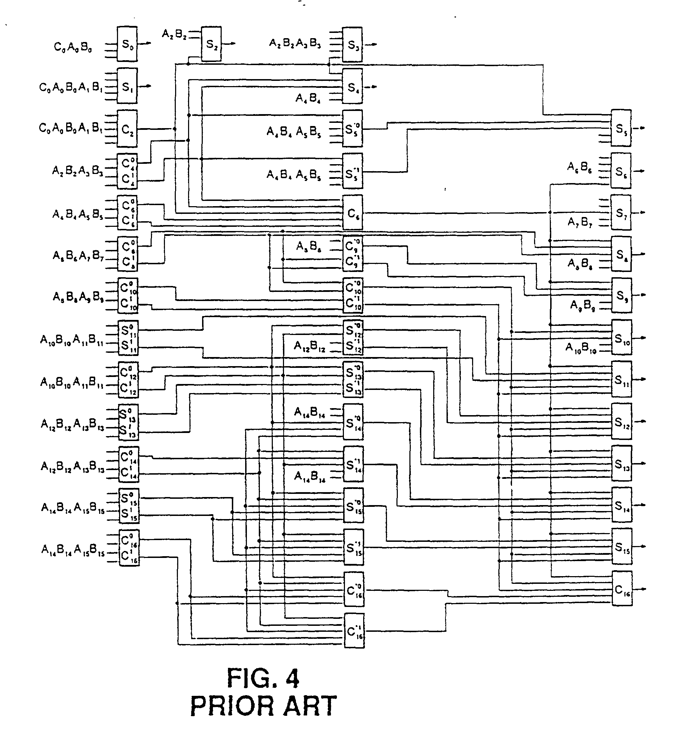

Fig. 4 shows another example of circuit components for implementing an adder. The adder of Fig. 4 is very fast, but, like the adder of Fig. 3, uses many components. Again, a faster carry logic requires a higher component density.

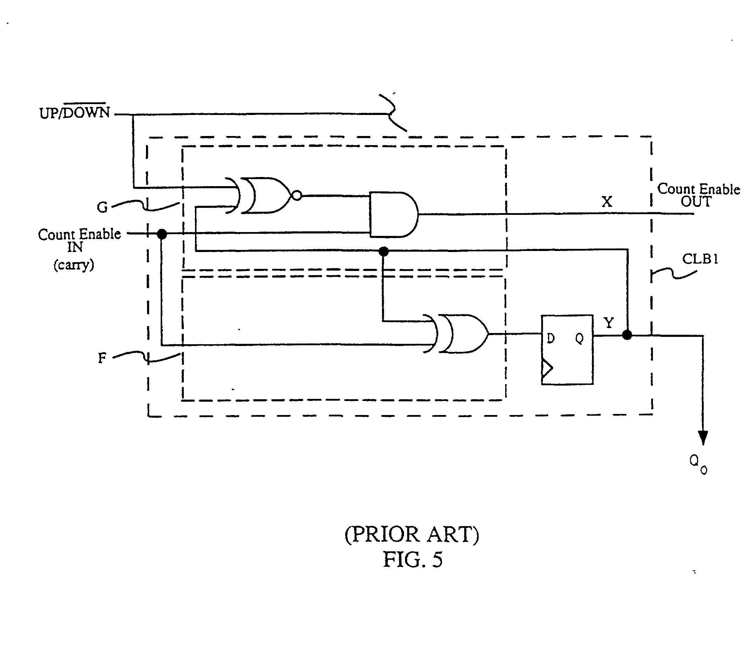

Pages 6-30 through 6-44 of Xilinx, Inc., "The Programmable Gate Array Data Book," copyright 1989, and available from Xilinx, Inc., 2100 Logic Drive, San Jose, CA 95124, show a variety of adders and counters which can be implemented in prior art Xilinx programmable logic devices. These pages of the Xilinx data book are incorporated herein by reference. Xilinx, Inc., owner of the copyright, has no objection to copying these pages but otherwise reserves all copyright rights whatsoever. The adder of Fig. 4 is shown on page 6-30 of the Xilinx data book. Fig. 5 shows a counter, also shown on page 6-34 of the Xilinx data book. In prior art Xilinx devices, calculating the sum requires one function generator, and calculating the carry function requires another function generator. Typically, two function generators are incorporated in one logic block of a Xilinx prior art configurable logic array.

Thus, in the adder circuits of both Fig. 4 and Fig. 5, and for other Xilinx prior art adder circuits as well, approximately one logic block is required for implementing each stage of an adder or counter.

US 4897808 discloses a prior art adder wist fast carry propagation.

Teilhe et al: "WSI-etc...", Proc. 1st Conf. on Computer Technology, Systems and Applications, 5/87, pp. 531-542, discloses a prior art logic array.

According to the present invention there is provided a programmable logic device comprising an array of logic blocks, each logic block having at least one circuit comprising:

a first input terminal and a second input terminal;
a carry-in terminal and a carry-out terminal;
first switching means for connecting the first input terminal to the carry-out terminal;
second switching means for connecting the carry-in terminal to the carry-out terminal;
first control means for causing the first switching means to connect the first input terminal to the carry-out terminal when and only when a logic value of a signal on the first input terminal is equal to a logic value of a signal on the second input terminal, and for causing the second switching means to connect the carry-in terminal to the carry-out terminal when and only when the logic value of a signal on the first input terminal does not equal the logic value of a signal on the second input terminal;
second control means for causing the second switching means to connect the carry-in terminal to the carry-out terminal when desired;
the logic blocks further including function generators for calculating a selectable one of a plurality of functions of a plurality of input signals, the input signals being derived from at least the first input terminal, the second input terminal, and the carry-in terminal.

The invention takes advantage of a Boolean functional simplification of one of two logically equivalent carry functions:

$$(8) \qquad C_i = (A \oplus B) \cdot (C_{i-1}) + (\overline{A \oplus B}) \cdot B$$

$$(9) \qquad C_i = (A \oplus B) \cdot (C_{i-1}) + (\overline{A \oplus B}) \cdot A$$

The propagation delay of the circuit provided by the invention is less dependent on the number of bits being added than a ripple carry adder, the delay per logic block (two bits) being approximately the delay of two inverters. Further, the invention achieves a fast carry logic with fewer components than in either the carry logic of a conventional full-adder or the look-ahead carry logic. The invention allows an adder to be implemented with half or less of the delay of a conventional ripple carry adder. When the carry logic hardware is incorporated in a configurable logic array in conjunction with general purpose logic blocks, the fast carry logic circuits preferably have a dedicated interconnect structure between carry inputs and carry outputs of adjacent logic blocks which further increases the performance.

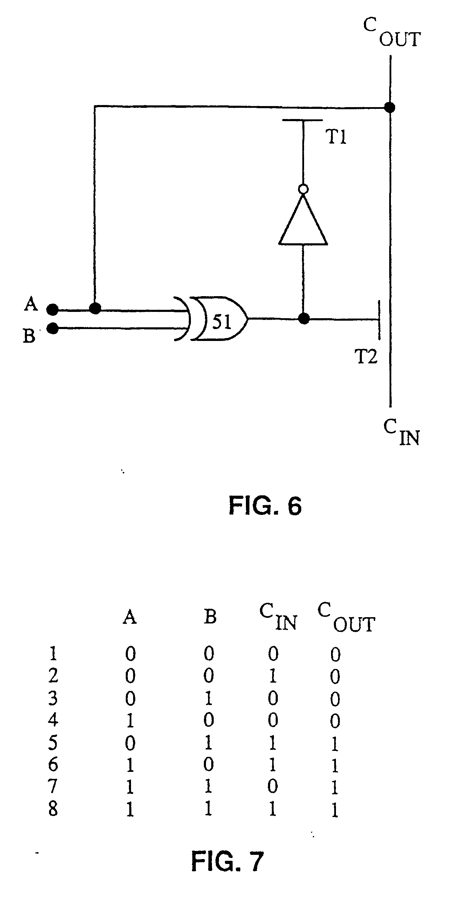

The invention is further described below, by way of example, with reference to Figures 6 to 12 of the accompanying drawings, in which:

Fig. 6 is a schematic diagram of a circuit providing one bit of carry logic according to the present invention.

Fig. 7 is a truth-table for displaying the relationship between the variables A, B, $C_{in}$ and $C_{out}$.

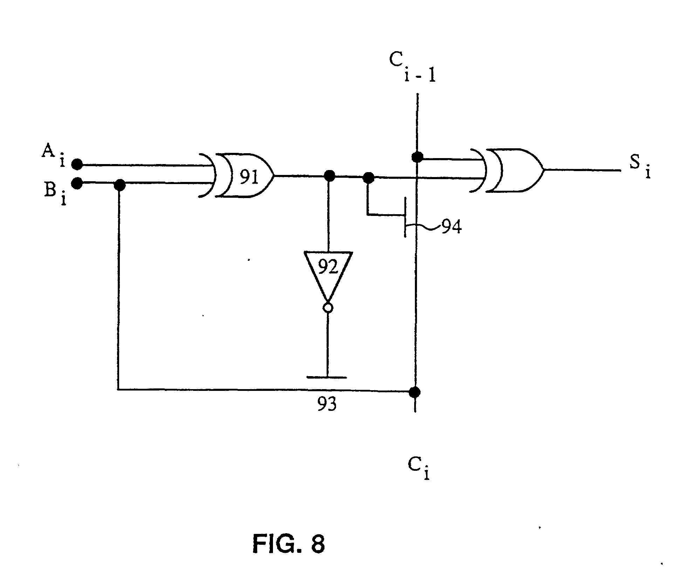

Fig. 8 is a schematic diagram of a circuit providing one bit of a full adder that uses the carry logic provided by the present invention.

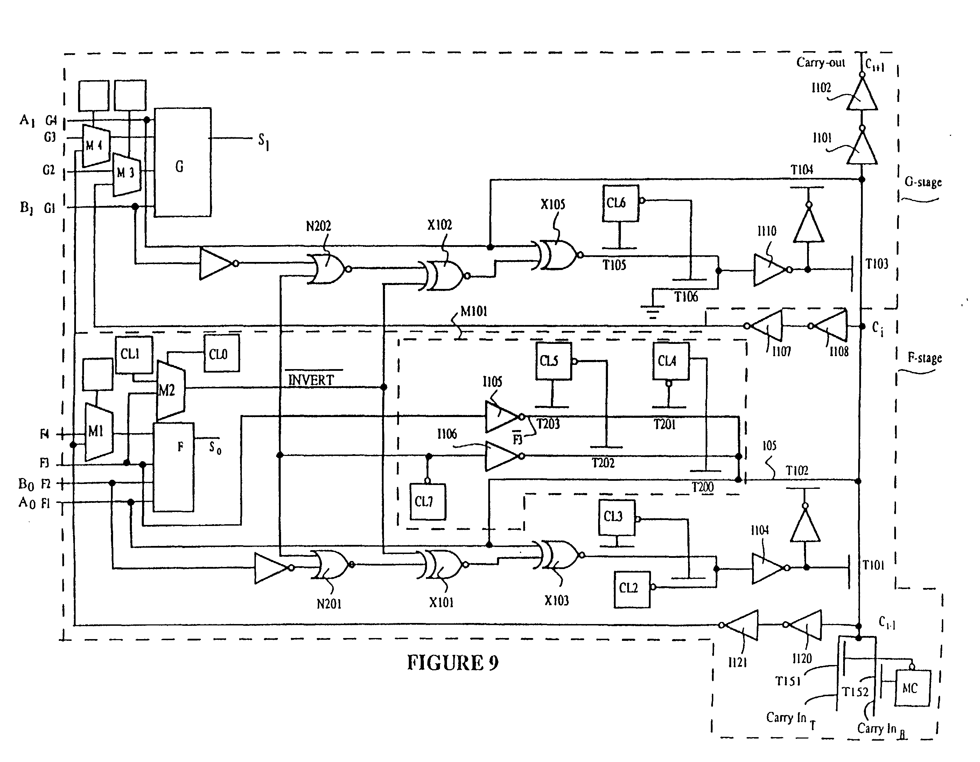

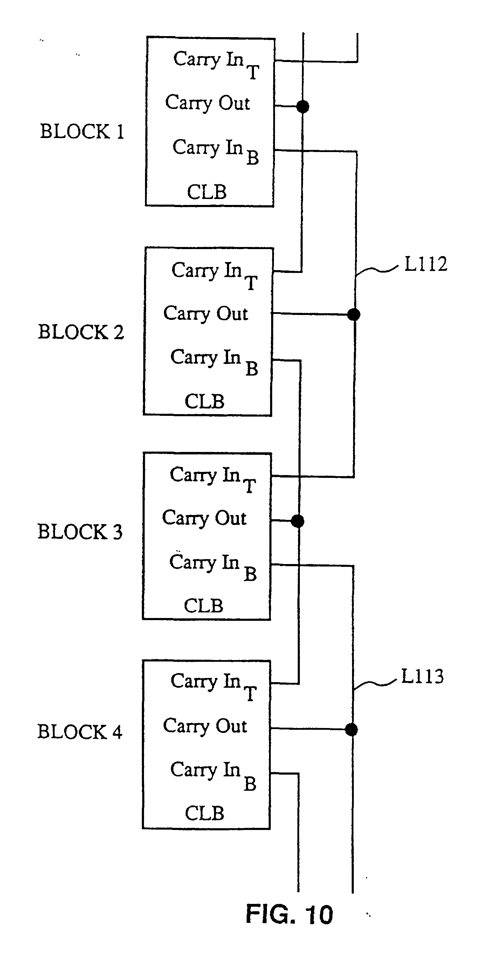

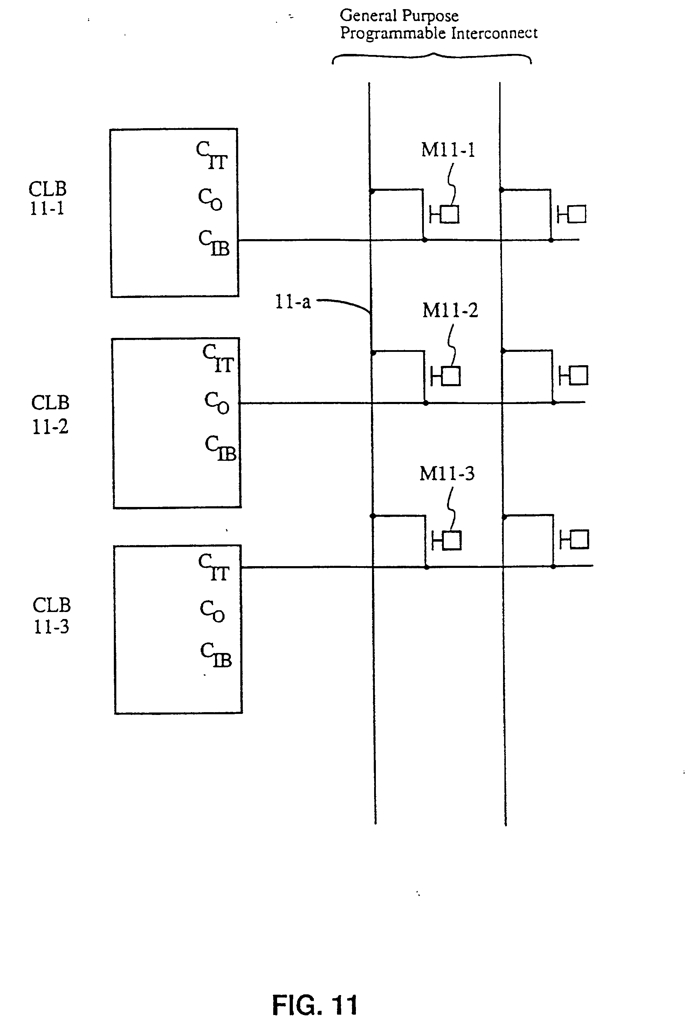

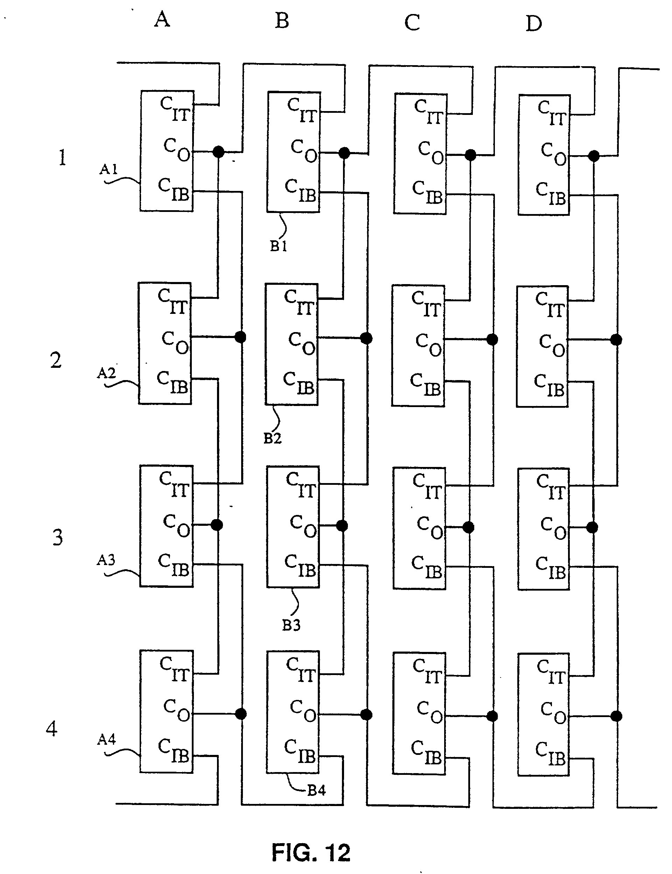

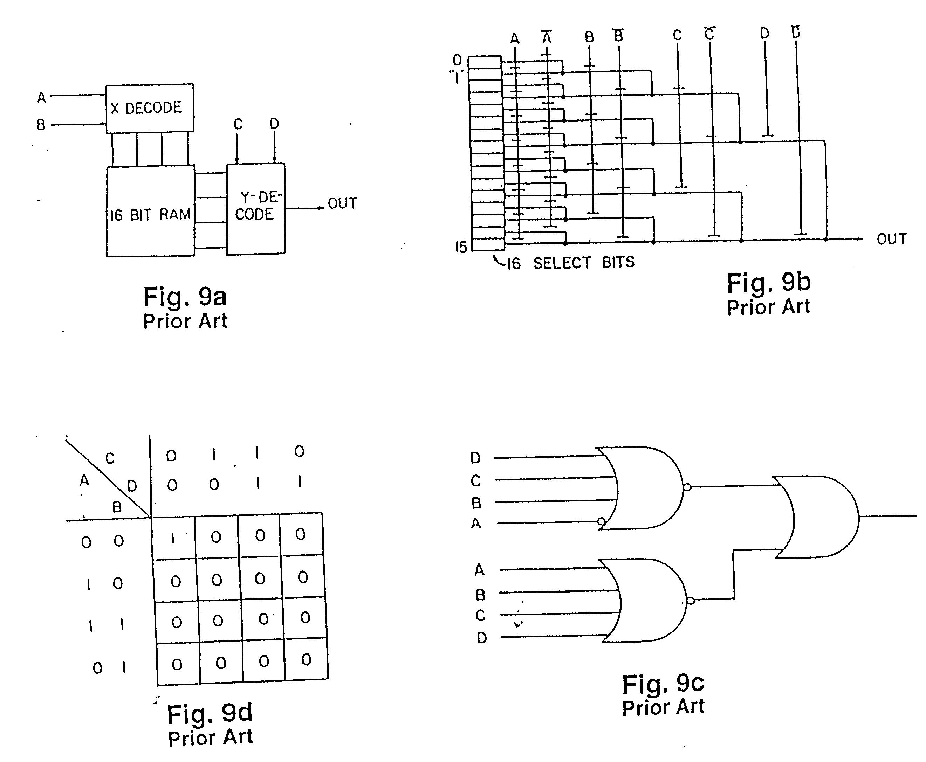

Fig. 9 is a schematic diagram of part of a logic block having two stages, each of which uses the carry logic provided by the present invention.

Fig. 9a shows a RAM embodiment of the F and G function generators of Fig. 9.

Fig. 9b shows another RAM embodiment of the F and G function generators of Fig. 9.

Fig. 9c shows one Karnaugh map for the RAM function generator of Fig. 9a or 9b.

Fig. 9d shows one of the $2^{16}$ logic functions which can be implemented by the RAM function generator of Fig. 9a or 9b.

Fig. 10 is a schematic diagram of a logic array showing one embodiment of dedicated-carry-logic interconnect circuitry.

Fig. 11 is a schematic diagram showing an example of carry interconnect circuitry implemented with programmable interconnects.

Fig. 12 is a schematic diagram showing one embodiment of dedicated carry logic interconnect circuitry.

The truth-table in Fig. 7 shows the logical relationships between two single bits that are being added, the carry-in bit, and the carry-out bit. A careful analysis of this truth table has revealed a useful pattern. When A and B are equal (lines 1,2, 7, and 8), the value of the carry-out $C_{out}$ bit is the value of A and of B. When A and B are not equal, on the other hand, (lines 3-6), the value of the carry-out $C_{out}$ bit is the value of the carry-in $C_{in}$ bit. Two equivalent Boolean logic equations can represent this pattern:

$$(10) \qquad C_{out} = (A \oplus B) \cdot (C_{in}) + (\overline{A \oplus B}) \cdot A$$

$$(11) \qquad C_{out} (A \oplus B) \cdot (C_{in}) + (\overline{A \oplus B}) \cdot B$$

The circuit in Fig. 6 implements equation (10). Two conditions are satisfied by this circuit. When A and B are not equal, the signal on the carry-in terminal is passed to the carry-out terminal and when A and B are equal, the signal on A is passed to the carry-out terminal.

As shown in Fig. 6, the two single bits being added, A and B, are applied to the two input terminals of XOR gate 51. If A and B are equal, a low output signal from XOR gate 51 turns on pass transistor T1 and turns off pass transistor T2, allowing passage of the signal from A to the carry-out terminal $C_{out}$. If A and B are not equal, the output of XOR gate 51 is high, which turns on pass transistor T2 and turns off pass transistor T1. This in turn allows passage of the signal on the carry-in terminal $C_{in}$ to the carry-out terminal $C_{out}$.

Fig. 8 shows the first embodiment of the invention implemented in a full adder. It will now be shown by comparing Fig. 2 and Fig. 8 that the fast carry logic described above provides faster propagation of the carry signal than a conventional ripple carry adder. Fig. 8 shows one stage of a full adder circuit constructed according to the invention. The carry propagation is,controlled as discussed above in connection with Fig. 6. As discussed above and shown in Fig. 2, the propagation delay of a conventional ripple carry adder is 1 AND gate plus 1 OR gate per pair of bits added plus 1 XOR gate. By contrast, as shown in Fig. 8, the worst-case delay of a circuit according to the invention occurs when one of the input signals, in this case $B_i$, is propagated to the carry out signal, that is, when the signal propagates through XOR gate 91 plus inverter 92 to turn on the pass-transistor 93. This happens simultaneously for all bits being added. The propagation delay for a carry signal to propagate through a long series of transistors such as transistor 94 adds only minimal time compared to a gate delay for generating the result of an addition. If four full-adder circuits such as shown in Fig. 8 are cascaded, in the worst case the output signal $C_{out}$ is available after an XOR gate delay plus an inverter delay plus the very small propagation delay through four pass transistors.

As shown in Fig. 9, two additional gate delays per two bits are added in a preferred embodiment by inverters I101 and I102 in order to maintain signal quality on a long line (approximately four gate delays for four bits). By contrast, the output signal $C_{out}$ of four cascaded conventional ripple carry full-adders, such as shown in Fig. 2, is not available until one XOR gate, four AND gates and four OR gates are passed (nine gate delays). Furthermore, whereas look-ahead carry circuits such as shown in Fig. 3 achieve faster carry propagation only through a much higher density of components, Applicant's invention requires no more components than a conventional ripple carry adder.

Fig. 9 shows a circuit in which the fast carry logic is incorporated in a circuit containing function generators, multiplexers, memory cells and extra logic gates which are used in configuring the circuit for multiple uses.

Input terminals F1 and F2 provide input signals $A_0$ and $B_0$, respectively. Function generator F, XNOR gate X101, memory cells CL0, CL1, multiplexer M2, and a third input terminal F3, work in conjunction to allow the same circuit to function selectively as an adder or as a subtractor. An embodiment in which a storage cell (not shown) receives an output signal $S_0$ from function generator F allows the circuit to function as an accumulator or counter as well. One input of the XNOR gate X101 is the output of M2, and the other input is the output of NOR gate N201. The two inputs to the NOR gate N201 are the complement of the signal on input terminal F2 and the complement of the value in CL7. For the circuit to function as a middle stage in a multi-bit adder, CL7 is set to input a low signal to NOR gate N201. This results in the output of NOR gate N201 being the signal on input terminal F2.

To control whether the circuit functions in the increment mode or the decrement mode, multiplexer M2 determines whether the signal provided by NOR gate N201 will or will not be inverted by XNOR gate X101. The value provided by M2 is provided by F3 or CL1 as controlled by CL0. CL1 is typically used to provide a static value while F3 provides a dynamically changing signal.

When M2 causes the circuit to function in the increment mode, the signal $B_0$ is propagated through XNOR gate X101 to XNOR gate X103. The truth-table of an XNOR gate shows that an input signal on one terminal of an XNOR gate is passed to the output of the XNOR gate when the signal on the other input terminal is high. Therefore, when the output of M2 is high, the carry-logic functions in the increment mode. When the output of M2 is low, however, signal $B_0$ is inverted by XNOR gate X101, and the carry logic of the circuit functions in the decrement mode. Further, if the control signal for selecting the increment/decrement mode originates on the F3 terminal, then this signal will also be applied to function generator F so that the sum logic implemented in function generator F will accordingly also function in either the increment or decrement mode.

First consider that the circuit is being used as an adder or incrementer and that multiplexer M2 is providing a high signal, so that the input $B_0$ is passed to the input of XNOR gate X103.

A second group of memory cells, CL2-CL5 and CL7, work together to allow the circuit of Fig. 9 to perform several functions. For the circuit to operate as a middle stage in a multi-bit adder, memory cells CL3, CL4 and CL5 are set high. Thus the combination X103 and I104 acts as an XOR gate, equivalent to XOR gate 91 in Fig. 8 so that the output of XNOR gate X103 will pass through inverter I104. Setting memory cell CL4 high places the signal from terminal F1 onto line 105. In this configuration the F-stage of Fig. 9 is equivalent to the carry circuit of Figs. 6 and 8. The signal from F1 is propagated to $C_i$ if transistor T102, equivalent to transistor 93 of Fig. 8, turns on in response to $A_0$ being equal to $B_0$. Setting memory cell CL5 high prevents the value in cell CL7 from simultaneously being propagated to line 105.

Setting CL3 low causes transistors T101 and T102 to be controlled by the signal in memory cell CL2. If CL2 is high, transistor T101 turns on, causing $C_{i-1}$ to be propagated to $C_i$. This configuration of memory cells CL2 and CL3 allows the carry signal $C_{i-1}$ to skip the carry logic of the F-stage. Skipping the carry logic of a particular stage in this way can be useful if layout constraints require a particular stage in a logic block to be used for something other than a stage in the adder (or counter, etc.).

If CL2 is set low (while CL3 is still low), T101 turns off and T102 turns on. When T102 is on, the signal on line 105 will be propagated to $C_i$. The signal on line 105 is controlled by memory cells CL4, CL5, and CL7, which together with inverters I105 and I106 make up 3:1 multiplexer M101. Multiplexer M101 controls which of 3 signals, the signal on terminal F1, the complement of the signal on terminal F3 ($\overline{F3}$), or the signal in memory cell CL7, will be placed on line 105. Note that the signal on F3 may be used by multiplexer M2 or by multiplexer M101.

As noted earlier, when the F-stage operates as a middle stage in a multi-bit adder, memory cells are programmed so that the signal on terminal F1 is placed on line 105. In addition CL3 is set high so that the value provided by XNOR gate X103, which is set to be a function of the $A_0$ and $B_0$ inputs on lines F1 and F2, will determine whether the carry-in signal $C_{i-1}$ or the value on F1 is propagated.

For the F-stage to add the least significant bit in a multi-bit adder, the carry-in can be preset to zero by applying a logic zero to one of Carry-In$_T$ or Carry-In$_B$ and setting memory cell MC to propagate the signal. (Generating this logic zero signal is discussed below in conjunction with Fig. 10.)

Alternatively, to preset the carry-in signal $C_i$ of the G-stage, any of the signal on $\overline{F3}$, the signal in CL7 or the signal on F1 can be used. The signal $\overline{F3}$ is selected to be placed on line 105 by setting CL5 high and CL4 low, and the signal in CL7 is selected by setting both CL4 and CL5 low. The F1 input terminal can also be used to preset the C. signal when the lowest order bit will be calculated in the G-stage. F1 can be used when the F1 input to the F function generator is not needed. To use F1 as the input for presetting $C_i$, high signals are stored in memory cells CL4 and CL5. Additionally, CL3 is set low and CL2 is set low, turning off transistor T101 and turning on transistor T102 so that the signal on line 105 will propagate to $C_i$.

In addition to functioning as a part of the 3:1 multiplexer M101, memory cell CL7 controls one input to NOR gates N201 and N202. For the F-stage to function as a middle stage in a multi-bit adder for adding values $A_0$ and $B_0$ on terminals F1 and F2, CL7 is set high so that the output of N201 is the signal on the input terminal F2. To add a constant to the input value $A_0$ on F1, CL7 is set low. This forces the input of N201 high, which forces the output of N201 low, and causes the addend to be selected by multiplexer M2. Memory cell CL0 can cause M2 to select between applying the value in CL1 and the value of F3 to XNOR gate X101 for generating an output to be added by X103 to $A_0$

on terminal F1. Thus, by programming CL7 low, a bit can be programmed to a constant value to be added to an input value without having to use the interconnect resources to which terminal F2 would be connected, which may be needed for carrying signals to other logic blocks (not shown).

Not all combinations of logic values in the memory cells of Fig. 9 are acceptable. For example, within M101, contention is possible if memory cell CL4 is high and memory cell CL5 is low, since both high and low signals could be simultaneously placed on line 105. To prevent such contention, software for programming the memory cells may be programmed to prevent this combination. Alternatively, an extra memory cell may be added to select only one of the two signals to be placed on line 105.

As discussed /above, two stages, F-stage and G-stage, each representing one bit of a multi-bit adder, are cascaded together as in Fig. 9. In a preferred embodiment, a logic block will contain two such cascaded stages. Thus a single logic block can implement two bits in a multi-bit function that uses carry logic. This is a distinct improvement in the density of components required to implement functions that use carry logic. By contrast, as shown in Fig. 5, a multi-bit counter is realized in prior-art circuitry with a density of only one bit per logic block.

Regarding the G-stage of Fig. 9, a multiplexer M3 in the G-stage receives the carry-out signal of the F-stage, $C_i$, after it is buffered through two inverters I107 and I108. In an adder, carry-out signal $C_i$ will be combined in the G-function generator with the addends $A_1$ and $B_1$, present on terminals G4 and G1 respectively, to compute the sum bit $S_1$. Carry-out signal $C_i$ of the F-stage is also available to be propagated by transistor T103 to the carry-out $C_{i+1}$ of the G-stage, depending on the configuration conditions of the carry-logic of the G-stage.

Much of the carry-logic of the G-stage is identical to the carry-logic of the F-stage. For example, XNOR gate X102 of the G-stage functions analogously to XNOR gate X101 of the F-stage and is controlled by the output of the same multiplexer M2 to determine whether the G-stage will function as an adder or incrementer on the one hand, or a subtractor or decrementer on the other hand. Additionally, NOR gate N202 of the G-stage functions as NOR gate N201 of the F-stage, where one input is controlled by the memory cell CL7 to allow forcing the addend of the G stage to a constant value without having to use the interconnect resources coupled to the input terminals of the G-stage.

However, t instead of memory cells CL2 and CL3 in the F-stage, the G-stage has only one memory cell CL6. CL6 functions similarly to CL3, controlling whether the G-stage functions as a mid-stage in a multi-bit adder or whether the carry signal will bypass the carry logic of the G-stage. When CL6 is high, transistor T105 turns on, and the G-stage functions as a middle stage in a multi-bit adder. When CL6 is low, thereby causing a low signal to be applied through transistor T106 to inverter I110, T103 is on (and T104 off). Turning on transistor T103 allows the carry signal at $C_i$ to bypass the carry logic of the G-stage. As with the F-stage, bypassing the G-stage, or any other particular stage in a logic block, might be required by a design layout which uses the G-stage for a different function.

Multiplexers M3 and M4 in the G-stage are connected and used differently from the multiplexers M1 and M2 of the F-stage. Multiplexer M2 of the F-stage controls whether the carry logic of the G-stage as well as the carry logic of the F-stage will function in an increment-mode or a decrement-mode. However, the G-stage does have its own multiplexer M4 which, in a preferred embodiment, controls whether the sum-logic in the function generator G will perform in the increment-mode or the decrement-mode. M4 is wired to control the sum logic in this way because one of its inputs, G3, is coupled to the same interconnect circuitry (not shown) as is the corresponding input F3 which controls the increment/decrement-mode of the F-function generator.

The other inputs of the multiplexers M3 and M4 of the G-stage are distributed so that signals needed simultaneously are not input into the same multiplexer. To operate as a middle stage in a multi-bit adder, the G-function generator needs both a signal controlling whether it operates in the increment or decrement mode, and a carry-out signal from the less significant bit. Thus, the increment/decrement mode signal applied to F3 is also applied through G3 to multiplexer M4 and the carry out signal from the less significant bit is routed to the multiplexer M3, making both signals available simultaneously to the G-function generator.

Further, in order to detect an overflow, as will be discussed below, the signals $C_i$ and $C_{i-1}$ must be compared and so.must be available simultaneously. Thus the signal $C_i$ is input to multiplexer M3 and the signal $C_{i-1}$ is input to the other multiplexer M4, so that both can be available together to be input to the G-function generator.

The circuit of Fig. 9, comprising two stages cascaded together has the further ability to detect in the G-stage an overflow in processing the most significant bit, performed in a previous block. It is well known in the art to detect an overflow by recognizing that the carry of the sign bit is different from the carry of the most significant bit. Detecting an overflow condition can thus be accomplished by computing the XOR function of the carry of the sign bit and the carry of the most significant bit. In the circuit shown in Fig. 9, the carry of the most significant bit is presented at $C_{i-1}$, the carry-in to the F-stage, and the carry of the sign bit (which is a function of the $A_0$ and $B_0$ signals to the F-stage and the $C_{i-1}$ signal, is presented to $C_i$, the carry-out of the F-stage. $C_{i-1}$ is routed through I120 and I121 to the multiplexer M4 in the G-stage. $C_i$ is routed through I107 and I108 to the multiplexer M3 in the G-stage. To configure the circuit of Fig. 9 to detect an overflow, M3 is programmed to route $C_i$ to the G-function generator, and M4 is programmed to route $C_{i-1}$ to the G-function generator. The G function generator is programmed to compute the XOR function of $C_i$ and $C_{i-1}$ which, as discussed above, is an overflow detect signal.

The circuit of Fig. 9 can also function in the decrement mode. In the decrement mode, the circuit can decrement a counter or perform subtraction, including subtracting a constant from a variable.

Several modes for performing subtraction can be used with the circuit of Fig. 9. Three common modes for subtraction are two's complement, one's complement and sign-magnitude.

When the two's complement mode of subtraction is to be used, the carry-in bit of the least significant bit is preset to logic one. If the least significant bit is to be provided by the F-stage, the carry in of the least significant bit is preset through Carry $In_T$ or Carry $In_B$ and memory cell MC is set to propagate the signal to $C_{i-1}$. To apply a preset signal to Carry $In_B$ or Carry $In_T$ of the F-stage, the preset signal is generated in the F-stage of another logic block, and connected to the F-stage of the least significant bit, by a means to be discussed below, in connection with Figs. 10-12. The signal may be generated in the F-stage as discussed above and passed through the G-stage to the next logic block by turning on transistor T103 and turning off transistor T104. Thus the carry logic in the G-stage of that logic block used to generate a preset signal is bypassed.

Alternatively, if the least significant bit is to be provided by the G-stage in a two's complement subtraction, then transistor T101 is turned off and transistor T102 is turned on (by setting CL3 low and CL2 low) so that one of the three inputs of multiplexer M101 can be used to preset $C_i$ to logic one. Multiplexer M101 can provide the logic one through the F3 terminal by applying a low signal to F3, and setting CL5 high and CL4 low. Multiplexer M101 can provide the logic one as a stored value in memory cell CL7 by setting CL7 high, CL5 low, and CL4 low. Multiplexer M101 can provide the logic one through the F1 input terminal by applying a high signal on F1, and setting CL5 and CL4 high.

When performing one's complement subtraction or sign-magnitude subtraction, the carry-in of the least significant bit is usually preset to logic zero. In the case of one's complement subtraction the carry-out of the sign bit must be added to the least significant bit to generate the final answer. This may be accomplished by connecting the carry out terminal of the sign bit to the carry in terminal of the least significant bit rather than presetting the carry in of the least significant bit. Alternatively, the carry out of the sign bit is added to the generated sum. When the least significant bit is to be calculated in the F-stage, carry-in $C_{i-1}$ is preset to zero by applying a logic zero to Carry InT or Carry $In_B$ and setting memory cell MC to propagate the signal to $C_{i-1}$. When the least significant bit is to be calculated in the G-stage, carry-in $C_i$ is preset to zero through one of the three paths in multiplexer M101 as discussed above. For providing the logic zero through the F3 terminal, a high signal is applied to F3 (since it will be inverted). For providing the logic signal through CL7, the logic zero is loaded into CL7. For providing the logic zero through F1, a low signal is applied to F1.

For both two's complement and one's complement subtraction, the output of multiplexer M2 must be set low. For sign-magnitude subtraction, the output of M2 depends upon whether the signs of the two numbers to be subtracted are the same. For sign-magnitude subtraction, the output of M2 is set low if the two numbers are of the same sign. The output of M2 is set high if the two numbers are of opposite signs.

A further embodiment, a multi-bit adder, is described with reference to Fig. 10. Here an ordered array of blocks 1-4, each block comprising a circuit as shown in Fig. 9, is provided such that the carry-out, labeled $C_{i+1}$ in Fig. 9 and labeled Carry Out on each logic block in Fig. 10 is connected both to the carry-in of the logic block above, labeled Carry $In_B$ in both figures and the carry-in of the logic block below, labeled Carry $In_T$ in both figures. Further, each logic block can selectively receive a carry signal either from the logic block above (on terminal Carry-Inm) or the logic block below (on terminal Carry InB). Whether a logic block receives a carry signal from the logic block above or the logic block below is controlled by memory cell MC. If MC is high, transistor T152 is on, and the carry signal from the logic block below is received on the " Carry $In_B$ terminal. If MC is low, transistor T151 is on, and the carry signal from the logic block above is received on the Carry $In_T$ terminal. For example, line L112 connects the carry-out terminal of block 2 to the carry-in terminal Carry $In_B$ of block 1 and to the carry-in terminal Carry $In_T$ of block 3. Similarly, line L113 connects the carry-out terminal of block 4 to the carry-in terminal Carry $In_B$ of block 3 and the carry-in terminal Carry $In_T$ of block 5 (not shown). Thus, block 3 receives a carry signal on Carry $In_B$ from block 4 on L113 and on Carry $In_T$ from block 2 on L112. How memory cell MC is programmed will determine which of transistors T151 and T152 will be on, and thus which of the carry signals will be used by the internal circuitry of logic block 3.

The primary benefit of dedicated carry interconnect circuitry is that it performs much faster than does programmable carry interconnect circuitry. This increased performance.is traded for the flexibility of the programmable interconnects. However, the dedicated interconnect circuitry shown in Fig. 10 is flexible in that the carry signals can be propagated in either of two directions through the array.

Fig. 11 shows an interconnect structure which does not use dedicated interconnect circuitry for propagating signals in a choice of directions through an array. Figure 11 shows only a partial set of memory cells and interconnects which would be needed in the interconnect structure for interconnecting logic blocks to form a multi-bit adder or other multi-bit function that uses carry logic. According to Figure 11, output $C_0$ of logic block 11-2 can be connected to either logic block 11-1 or logic block 11-3 by turning on a corresponding transistor controlled by memory cell M11-2 which connects the output of logic block 11-2 to interconnect line 11-a. If it is desired to connect output $C_0$ of logic block 11-2 to input $C_{IB}$ of logic block 11-1, memory cell M11-1 is programmed to turn on its corresponding transistor so that the signal on line 11-a will propagate to terminal $C_{IB}$ of block 11-1. If it is desired to connect output $C_0$ to logic block 11-3, memory cell M11-3 is turned on to connect interconnect line 11-a to input $C_{IT}$ of logic block 11-3. Other memory cells (not shown) can likewise be programmed to control the direction of signal propagation from one logic block to the next. It is easy to see that a large number of memory cells is needed in order to provide flexibility in controlling the propagation direction of the carry signal through the stages of a multi-bit adder.

Another embodiment shown in Fig. 12 exhibits more sophisticated dedicated carry interconnect circuitry. This dedicated interconnect circuitry allows a carry chain to be built in a serpentine fashion of arbitrary length. Some of the blocks are configured as in Fig. 10, that is, such that the carry-out signal is propagated to both the logic block above and the logic block below. However, at the top and bottom edges of the array, the circuits are configured differently. At the top edge, the carry-out signal of a logic block is propagated to the carry-in of the logic block below, and to the carry-in of the logic block to the right. Further, each top logic block receives a carry-in signal from the logic block below and from the logic block to the left. Each circuit on the bottom is configured such that the carry-out signal of a logic block is propagated to the carry-in of the logic block above, and to the carry-in of the logic block to the right. Further, each bottom circuit receives a carry-in signal from the logic block above and from the logic block to the left. Memory cell MC of each logic block controls which carry-in signal of the two available carry-in signals will be received by the logic block as discussed in connection with Fig. 10.

The sophisticated dedicated interconnect circuitry shown in Fig. 12 is especially useful in providing increased flexibility in design layouts. Multi-bit adders or counters, or other multi-bit arithmetic functions, need not be restricted to a particular column of logic blocks. For example, an eight-bit counter can be implemented in the horseshoe configuration consisting of logic blocks B3, B4, A4, and A3, where A3 will contain the least significant bit and the next more significant bit, A4 the next two more significant bits, B4 the next, and finally, B3 the two most significant bits. The memory cells MC of each block will be programmed such that the carry signal will propagate from $C_0$ of logic block A3 to $C_{IT}$ of logic block A4, then from $C_0$ of logic block A4 to $C_{IB}$ of logic block B4, and finally from $C_0$ of logic block B4 to $C_{IB}$ of logic block B3. Since the internal circuitry of the logic blocks (as shown in Fig. 9) allows the carry logic of any particular bit(s) to be bypassed, the eight-bit counter (or other function using carry logic) need not be realized in adjacent blocks. So, for example, the least significant bits could be in logic block A2 instead of A3, with the other six bits being in A4, B4, B3 as in the previous example. By appropriately programming the memory cells CL2, and CL3 and CL6 in block A3, the carry signal $C_0$ of logic block A2 will bypass the carry logic of logic block A3, and propagate to $C_{IT}$ of logic block A4.

Many other embodiments of the present invention incorporating the features taught here will become obvious to those skilled in the art in light of the above disclosure. For example, regarding the dedicated interconnect of the carry logic between logic blocks, although Fig. 12 shows interconnecting logic blocks in a serpentine structure and Figs. 10 and 12 show two adjacent logic blocks providing input to the carry logic of a particular logic block, it is possible for more than two logic blocks to provide input to the carry logic of a particular logic block and it is possible to interconnect logic blocks which are not contiguous. Further, although Fig. 9 shows a logic block having two stages of carry logic and two function generators, it is possible to form logic blocks having one stage or having more than two stages. An embodiment in which one logic block has four stages, and in which inverters for buffering the carry signal are provided only once for the four stages, offers a speed improvement over the embodiment of Fig. 9, and may be preferred for certain design specifications.

For another example, although the control circuitry of Fig. 9 is described as controlled by memory cells, it is obvious that these memory cells can be SRAM memory cells, EPROMS, EEPROMS, fuses, or antifuses. It is also obvious that control signals can be provided by output signals of logic gates and other available signals. These embodiments and others which become obvious in light of the above disclosure are intended to fall within the scope of the present invention.

**Claims**

1. A programmable logic device comprising an array of logic blocks, each logic block having at least one circuit comprising:

   a first input terminal (A) and a second input terminal (B);
   a carry-in terminal (Ci-1) and a carry-out terminal (Ci);
   first switching means (T102) for connecting the first input terminal (A) to the carry-out terminal (Ci);
   second switching means (T101) for connecting the carry-in terminal (Ci-1) to the carry-out terminal (Ci);
   first control means (N201, X101, X103, I104) for causing the first switching means (T102) to connect the first input terminal (A) to the carry-out terminal (Ci) when and only when a logic value of a signal on the first input terminal (A) is equal to a logic value of a signal on the second input terminal (B), and for causing the second switching means (T101) to connect the carry-in terminal (Ci-1) to the carry-out terminal (Ci) when and only when the logic value of a signal on the first input terminal (A) does not equal the logic value of a signal on the second input terminal (B);

second control means (CL2, CL3) for causing the second switching means (T101) to connect the carry-in terminal (Ci-1) to the carry-out terminal (ci) when desired;

the logic blocks further including function generators (F) for calculating a selectable one of a plurality of functions of a plurality of input signals (F1, F2, F3, F4, Ci-1), the input signals being derived from at least the first input terminal (A), the second input terminal (B), and the carry-in terminal (Ci-1).

2. A programmable logic device as in claim 1 wherein the logic blocks are configurable and wherein the first switching means, the second switching means, and the first control means are realized in dedicated hardware.

3. A logic device as claimed in Claim 1 or 2, wherein the control means comprises:

an inverter, and an XOR gate with at least two inputs and one output;
wherein the first (A) and second (B) input terminals are inputs to the XOR gate;
the output of the XOR gate is connected to the input of the inverter;
the signal output from the inverter controls the first switching means; and
the signal output from the XOR gate controls the second switching means.

4. A logic device as claimed in Claim 3, wherein each logic block has:

a third input terminal (F3) and means for selecting the alternative signal from a stored value and a signal on the third input terminal.

5. A logic device as claimed in Claim 1 or 2, wherein the logic block has:

a third input terminal (F3), means for providing a signal on the third input terminal, and means (CL4, T200, T201) for selecting between causing the first switching means (T102) to connect the first input terminal (A) to the carry-out terminal (Ci) and causing the first switching means to apply the signal on the third input terminal to the carry-out terminal (Ci).

6. A logic device as claimed in Claim 5, wherein each logic block comprises means (CL5) for selecting between applying a stored value to the carry-out terminal (Ci) and applying an input signal to the carry-out terminal.

7. A logic device as claimed in Claim 1 or 2, wherein each logic block comprises means for inverting or not inverting a signal to generate an operand, and means for applying the operand to the second input terminal (B).

8. A logic device as claimed in Claim 1 or 2, wherein each logic block comprises:

an XNOR gate (X103);
a first (I104) and a second inverter;
third and fourth controllable switching means ; and
a first (CL2) and a second (CL3) memory cell, each memory cell having an output and an output-complement;
wherein the first (A) and the second (B) input terminals are inputs to the XNOR gate (X103),
an output of the XNOR gate (X103) is input to the first inverter (I104) by the third switching means,
the output of the first inverter (I104) is input to the second inverter,
the output-complement of the first memory cell (CL2) is input to the first inverter (I104) by the fourth switching means,
the first switching means (T102) is controlled by the output signal of the second inverter,
the second switching means (T101) is controlled by the output signal of the first inverter (I104),
the third switching means is controlled by the output of the second memory cell (CL3), and
the fourth switching means is controlled by said output-complement of the second memory cell (CL3).

9. A logic device as claimed in Claim 8, wherein the memory cells (CL2, CL3) are static random access memory cells, electrically programmable switches, electrically erasable electrically programmable switches, fuses, or antifuses.

**10.** A logic device as claimed in Claim 1 or 2, wherein each logic block has a three-way multiplexer (M) for selecting between causing the first switching means (T102) to connect the first input terminal (A) to the carry-out terminal (Ci), causing the first switching means (T102) to connect a third input terminal to the carry-out terminal (Ci), and causing the first switching means (T102) to apply a stored value to the carry-out terminal (Ci).

**11.** A logic device as claimed in Claim 1 or 2, wherein each logic block has:

a third input signal (F3);
means for providing a stored value;
third (T201) fourth (T200), fifth (T203), and sixth (T202) controllable switching means; and
means for controlling the third, fourth, fifth and sixth controllable switching means such that:
the third input terminal (F3) is coupled to the carry-out terminal (Ci) only when the first (T102), third (201), and fifth (T203) switching means are conductive;
the stored value is coupled to the carry-out terminal (Ci) only when the sixth (T202) and the first switching means (T102) are conductive; and
the first input terminal (A) is coupled to the carry-out terminal (Ci) only when the fourth and first (T102) switching means are conductive.

**12.** A logic device as claimed in Claim 1 or 2, wherein the control means comprises:

an XNOR gate having two input terminals coupled respectively to the first (A) and second (B) input signal terminals, and an output terminal;
a first inverter (I104), the output of the first inverter controlling the second switching means (T101);
means for providing a stored value;
third switching means (CL3), wherein the third switching means selects between providing the stored value and a signal output from the XNOR gate to the input terminal of the first inverter; and
a second inverter connected to the output terminal of the first inverter, the output terminal of the second inverter controlling the first switching means (T102).

**13.** A logic device as claimed in Claim 1 or 2, wherein each logic block has:

an XNOR gate (X101);
a first memory cell (CL0) and second memory cell (CL1);
a multiplexer (M2) with at least two inputs and one output;
a third input terminal (F3);
wherein the output of the first memory cell is an input of the multiplexer (M2);
the third input terminal (F3) is an input of the multiplexer (M2);
the output of the second memory cell selects between connecting the first memory cell and connecting the third input terminal to the output terminal of the multiplexer (M2);
the output of the multiplexer is an input of the XNOR gate (X101);
the second input terminal (B) is coupled to an input of the XNOR gate (X101); and
the XNOR gate and the first input terminal control the means for causing.

**14.** A logic device as claimed in Claim 1 or 2, wherein each logic block has at least:

a first circuit and a second circuit, the carry-out terminal of the first circuit being connected to the carry-in terminal of the second circuit, the carry-out terminal of the second circuit being coupled to a carry-out terminal of the logic block;
at least one logic block carry-in terminal; and
means for using a signal on the logic block carry-in terminal or on one of the logic block carry-in terminals as a carry-in signal on the carry-in terminal of the first circuit.

**15.** A logic device as claimed in Claim 14, wherein the second circuit comprises means for comparing a signal on the carry-out terminal of the first circuit with the carry-in signal on the first circuit, the means being useful for detecting an overflow condition.

**16.** A logic device as claimed in Claim 15, wherein the means for comparing comprises:

a first multiplexer for selecting between the carry-in signal of the first circuit and a first input signal to the second circuit;
a second multiplexer for selecting between the carry-out signal of the first circuit and a second input signal to the second circuit;
means for controlling the first and second multiplexers; and
means for generating the XOR function of signals provided by the first and second multiplexers.

17. A logic device as claimed in Claim 16, wherein the means for generating the XOR function of signals provided by the multiplexers comprises a combinatorial function generator.

18. A logic device as claimed in Claim 17, wherein the means for generating comprises a logic function generator with at least two inputs, wherein each of the input terminals is a separate input to the function generator.

19. A logic device as claimed in claim 1 or 2, wherein each logic block comprises:

means for receiving a first input signal and placing the first input signal on said first input terminal;
means for receiving a second input signal;
means for selecting between placing the second input signal, the complement of the second input signal, and a constant value on the second input terminal.

20. A logic device as claimed in Claim 19, wherein the means for selecting comprises:

means for replacing the second input signal with a first constant value;
means for controlling whether the second input signal will be replaced with the first constant value; and
means for selecting whether the first constant value will be inverted.

21. A logic device as claimed in any preceding claim wherein each logic block has a carry-in terminal and a carry-out terminal, and the carry-out terminal of each logic block is coupled to at least one carry-in-terminal of a logic block preceding the logic block and to the carry-in terminal of a logic block following the logic block.

22. A logic device as claimed in Claim 21, wherein the logic blocks are positioned in a rectangular array of horizontal rows and vertical columns and wherein the logic block preceding each logic block and the logic block following it are positioned in the same column or in the same row as said each logic block.

23. A logic device as claimed in Claim 21 or 22, wherein the logic block preceding each logic block and the logic block following it are contiguous to said each logic block.

24. A logic device as claimed in Claim 1 or 2, wherein each logic block comprises at least a first stage (F stage) and a second stage (G stage), and wherein each stage comprises:

at least a first input terminal and a second input terminal;
a carry-in terminal;
a carry-out terminal;
dedicated circuitry for performing carry logic with at least three inputs and at least one output;
wherein the three inputs or three of the at least three inputs comprise:
a signal on the first input terminal;
a signal on the second input terminal; and
a signal on the carry-in terminal,

wherein the output is a carry function of the three inputs.

25. A logic device as claimed in Claim 24, wherein the carry-out terminal of the first stage is connected directly to the carry-in terminal of the second stage, and the carry-out terminal of one of the logic blocks is connected through buffering means to the carry-in terminal of another one of the logic blocks.

26. A logic device as claimed in Claim 1, 2 or 25, wherein each logic block comprises:

controllable means for selectively allowing the signal on the carry-in terminal to propagate to the carry-out terminal; or

allowing the signal on the or one of the first input terminals and the second input terminal to propagate to said carry-out terminal.

27. A logic device as claimed in Claim 1, 2 or 25, wherein each logic block comprises controllable means for providing a stored signal to the carry-out terminal.

28. A logic device as claimed in Claim 1, or 25, wherein each logic block comprises a third input terminal, and controllable means for selectively causing a signal on the third input terminal to propagate to the carry-out terminal.

29. A logic device as claimed in Claim 25, wherein each logic block comprises controllable means for selectively allowing the signal on the carry-in terminal to propagate to the carry-out terminal independently of signals on the first and second input terminals.

30. A logic device as claimed in Claim 25, wherein each logic block comprises second means for computing the carry function of the signal on the first input terminal, the signal on the carry-in terminal, and a complement of the signal on the second input terminal, and means for selecting between using the first means and using said second means.

31. A logic device as claimed in Claim 1 or 2, and further comprising means for allowing the device to function as an adder or a subtractor.

32. A logic device as claimed in Claim 1 or 2, having a circuit structure comprising dedicated interconnect lines for interconnecting the hardware for performing the carry function in a first logic block to hardware for performing the carry function in at least a second logic block.

33. A logic device as claimed in Claim 32, wherein the dedicated interconnect lines comprise lines for interconnecting the hardware for performing the carry function in a first logic block to hardware for performing the carry function in at least a third logic block.

34. A logic device as claimed in Claim 33, having a circuit structure comprising programmable interconnect lines, wherein the hardware for performing the carry function comprises:

means for selecting the carry-in signal of the third logic block from among at least carry-out signals on the carry-out terminals of the first and second logic blocks.

35. A logic device as claimed in Claim 33 or 34, wherein the logic blocks are located in rows and columns within the integrated circuit structure, and the third logic block is positioned contiguous with the first and second logic blocks.

36. A logic device as claimed in Claim 35, wherein the first logic block is positioned in the same row as the third logic block and the second logic block is positioned in the same column as the third logic block.

37. A logic device as claimed in Claim 33 or 34, wherein the logic blocks are positioned in rows and columns and the first and second logic blocks are located in the same row or same columns as the third logic block.


**Patentansprüche**

1. Programmierbare Logikvorrichtung, die eine Anordnung von Logikblöcken umfasst, wobei jeder Logikblock mindestens einen Schaltkreis aufweist, der Folgendes umfasst:

eine erste Eingangsklemme (A) und eine zweite Eingangsklemme (B);

eine Übertrag-Eingangsklemme (Ci-1) und eine Übertrag-Ausgangsklemme (Ci);

ein erstes Schaltmittel (T102), um die erste Eingangsklemme (A) mit der Übertrag-Ausgangsklemme (Ci) zu verbinden;

ein zweites Schaltmittel (T101), um die Übertrag-Eingangsklemme (Ci-1) mit der Übertrag-Ausgangsklemme

**13**

(Ci) zu verbinden;

ein erstes Steuermittel (N201, X101, X103, I104), um das erste Schaltmittel (T102) zu veranlassen, die erste Eingangsklemme (A) mit der Übertrag-Ausgangsklemme (Ci) zu verbinden, wenn und nur dann, wenn ein logischer Wert eines Signals an der ersten Eingangsklemme (A) gleich einem logischen Wert eines Signals an der zweiten Eingangsklemme (B) ist, und um das zweite Schaltmittel (T101) zu veranlassen, die Übertrag-Eingangsklemme (Ci-1) mit der Übertrag-Ausgangsklemme (Ci) zu verbinden, wenn und nur dann, wenn der logische Wert eines Signals an der ersten Eingangsklemme (A) nicht gleich dem logischen Wert eines Signals an der zweiten Eingangsklemme (B) ist;

ein zweites Steuermittel (CL2, CL3), um das zweite Schaltmittel (T101) zu veranlassen, die Übertrag-Eingangsklemme (Ci-1), falls gewünscht, mit der Übertrag-Ausgangsklemme (ci) zu verbinden;

wobei die Logikblöcke des Weiteren Funktionsgeneratoren (F) zur Berechnung einer wählbaren Funktion von einer Vielzahl von Funktionen von einer Vielzahl von Eingangssignalen (F1, F2, F3, F4, Ci-1) umfassen, wobei die Eingangssignale von mindestens der ersten Eingangsklemme (A), der zweiten Eingangsklemme (B) und der Übertrag-Eingangsklemme (Ci-1) abgeleitet werden.

2. Programmierbare Logikvorrichtung nach Anspruch 1, wobei die Logikblöcke konfigurierbar sind und wobei das erste Schaltmittel, das zweite Schaltmittel und das erste Steuermittel in zweckbestimmter Hardware realisiert sind.

3. Logikvorrichtung nach Anspruch 1 oder 2, wobei das Steuermittel Folgendes umfasst:

einen Inverter und ein XOR-Gatter mit mindestens zwei Eingängen und einem Ausgang;

wobei die erste (A) und die zweite (B) Eingangsklemme Eingänge in das XOR-Gatter sind;

der Ausgang des XOR-Gatters mit dem Eingang des Inverters verbunden ist;

der Signalausgang von dem Inverter das erste Schaltmittel steuert; und

der Signalausgang von dem XOR-Gatter das zweite Schaltmittel steuert.

4. Logikvorrichtung nach Anspruch 3, wobei jeder Logikblock Folgendes aufweist:

eine dritte Eingangsklemme (F3) und ein Mittel zum Auswählen des alternativen Signals aus einem gespeicherten Wert und einem Signal an der dritten Eingangsklemme.

5. Logikvorrichtung nach Anspruch 1 oder 2, wobei der Logikblock Folgendes aufweist:

eine dritte Eingangsklemme (F3), ein Mittel zum Bereitstellen eines Signals an der dritten Eingangsklemme und ein Mittel (CL4, T200, T201) um auszuwählen, ob das erste Schaltmittel (T102) veranlasst werden soll, die erste Eingangsklemme (A) mit der Übertrag-Ausgangsklemme (Ci) zu verbinden, oder ob das erste Schaltmittel veranlasst werden soll, das Signal an der dritten Eingangsklemme an die Übertrag-Ausgangsklemme (Ci) anzulegen.

6. Logikvorrichtung nach Anspruch 5, wobei jeder Logikblock ein Mittel (CL5) umfasst, um auszuwählen, ob ein gespeicherter Wert an die Übertrag-Ausgangsklemme (Ci) angelegt werden soll, oder ob ein Eingangssignal an die Übertrag-Ausgangsklemme angelegt werden soll.

7. Logikvorrichtung nach Anspruch 1 oder 2, wobei jeder Logikblock ein Mittel umfasst, um ein Signal umzukehren oder nicht umzukehren, um einen Operanden zu erzeugen, und ein Mittel umfasst, um den Operanden an die zweite Eingangsklemme (B) anzulegen.

8. Logikvorrichtung nach Anspruch 1 oder 2, wobei jeder Logikblock Folgendes umfasst:

ein XNOR-Gatter ()(103);

einen ersten (I104) und einen zweiten Inverter;

ein drittes und viertes steuerbares Schaltmittel; und

eine erste (CL2) und eine zweite (CL3) Speicherzelle, wobei jede Speicherzelle einen Ausgang und ein Ausgangskomplement aulweist;

wobei die erste (A) und die zweite (B) Eingangsklemme Eingänge in das XNOR-Gaiter (X103) sind,

ein Ausgang des XNOR-Gatters (X103) durch das dritte Schaltmittel an den ersten Inverter (I104) angelegt wird,

der Ausgang des ersten Inverters (I104) an den zweiten Inverter angelegt wird,

das Ausgangskomplement der ersten Speicherzelle (CL2) durch das vierte Schaltmittel an den ersten Inverter (I104) angelegt wird,

das erste Schaltmittel (T102) von dem Ausgangssignal des zweiten Inverters gesteuert wird,

das zweite Schaltmittel (T101) von dem Ausgangssignal des ersten Inverters (I104) gesteuert wird,

das dritte Schaltmittel von dem Ausgang der zweiten Speicherzelle (CL3) gesteuert wird, und

das vierte Schaltmittel von dem Ausgangskomplement der zweiten Speicherzelle (CL3) gesteuert wird.

9. Logikvorrichtung nach Anspruch 8, wobei die Speicherzellen (CL2, CL3) statische Direktzugriffsspeicherzellen, elektrisch programmierbare Schalter, elektrisch löschbare elektrisch programmierbare Schalter, Sicherungen oder Antifuses sind.

10. Logikvorrichtung nach Anspruch 1 oder 2, wobei jeder Logikblock einen Dreiwege-Multiplexer M aufweist, um auszuwählen, ob das erste Schaltmittel (T102) veranlasst werden soll, die erste Eingangsklemme (A) mit der Übertrag-Ausgangsklemme (Ci) zu verbinden, das erste Schaltmittel (T102) veranlasst werden soll, eine dritte Eingangsklemme mit der Übertrag-Ausgangsklemme (Ci) zu verbinden, oder das erste Schaltmittel (T102) veranlasst werden soll, einen gespeicherten Wert an die Übertrag-Ausgangsklemme (Ci) anzulegen.

11. Logikvorrichtung nach Anspruch 1 oder 2, wobei jeder Logikblock Folgendes aufweist:

ein drittes Eingangssignal (F3);

ein Mittel zur Bereitstellung eines gespeicherten Werts;

ein drittes (T201), ein viertes (T200), ein fünftes (T203) und ein sechstes (T202) steuerbares Schaltmittel; und

ein Mittel zum Steuern des dritten, vierten, fünften und sechsten steuerbaren Schaltmittels, so dass:

die dritte Eingangsklemme (F3) an die Übertrag-Ausgangsklemme (Ci) nur dann angeschlossen ist, wenn das erste (T102), dritte (201) und fünfte (T203) Schaltmittel durchschalten;

der gespeicherte Wert an die Übertrag-Ausgangsklemme (Ci) nur dann angeschlossen ist, wenn das sechste (T202) und erste (T102) Schaltmittel durchschalten; und

die erste Eingangsklemme (A) an die Übertrag-Ausgangsklemme (Ci) nur dann angeschlossen ist, wenn das vierte und erste (T102) Schaltmittel durchschalten.

12. Logikvorrichtung nach Anspruch 1 oder 2, wobei das Steuermittel Folgendes umfasst:

ein XNOR-Gatter mit zwei Eingangsklemmen, die jeweils an die erste (A) und die zweite (B) Eingangssignalklemme angeschlossen sind, und eine Ausgangsklemme;

einen ersten Inverter (I104), wobei der Ausgang des ersten Inverters das zweite Schaltmittel (T101) steuert;

ein Mittel zur Bereitstellung eines gespeicherten Werts;

ein drittes Schaltmittel (CL3), wobei das dritte Schaltmittel auswählt, ob der Eingangsklemme des ersten Inverters der gespeicherte Wert oder eine Signalausgabe von dem XNOR-Gatter bereitgestellt werden soll; und

einen zweiten Inverter, der mit der Ausgangsklemme des ersten Inverters verbunden ist, wobei die Ausgangsklemme des zweiten Inverters das erste Schaltmittel (T102) steuert.

13. Logikvorrichtung nach Anspruch 1 oder 2, wobei jeder Logikblock Folgendes aufweist:

ein XNOR-Gatter (X101);

eine erste Speicherzelle (CL0 und eine zweite Speicherzelle (CL1);

einen Multiplexer (M2) mit mindestens zwei Eingängen und einem Ausgang;

eine dritte Eingangsklemme (F3);

wobei der Ausgang der ersten Speicherzelle ein Eingang des Multiplexers (M2) ist;

die dritte Eingangsklemme (F3) ein Eingang des Multiplexers (M2) ist;

der Ausgang der zweiten Speicherzelle auswählt, ob die erste Speicherzelle oder die dritte Eingangsklemme an die Ausgangsklemme des Multiplexers (M2) angeschlossen werden soll;

der Ausgang des Multiplexers ein Eingang des XNOR-Gatters (X101) ist;

die zweite Eingangsklemme (B) an einen Eingang des XNOR-Gatters (X101) angeschlossen ist; und

das XNOR-Gatter und die erste Eingangsklemme das Mittel zur Veranlassung steuern.

14. Logikvorrichtung nach Anspruch 1 oder 2, wobei jeder Logikblock mindestens Folgendes aufweist:

einen ersten und einen zweiten Schaltkreis, wobei die Übertrag-Ausgangsklemme des ersten Schaltkreises an die Übertrag-Eingangsklemme des zweiten Schaltkreises angeschlossen ist und die Übertrag-Ausgangsklemme des zweiten Schaltkreises an die Übertrag-Ausgangsklemme des Logikblocks angeschlossen ist;

mindestens eine Logikblock-Übertrag-Eingangsklemme; und

ein Mittel zur Verwendung eines Signals an der Logikblock-Übertrag-Eingangsklemme oder an einer der Logikblock-Übertrag-Eingangsklemmen als ein Übertrag-Eingangssignal an der Übertrag-Eingangsklemme des ersten Schaltkreises.

15. Logikvorrichtung nach Anspruch 14, wobei der zweite Schaltkreis ein Mittel umfasst, um ein Signal an der Übertrag-Ausgangsklemme des ersten Schaltkreises mit dem Übertrag-Eingangssignal des ersten Schaltkreises zu vergleichen, wobei das Mittel für die Erfassung eines Überlaufzustandes nützlich ist.

16. Logikvorrichtung nach Anspruch 15, wobei das Mittel zum Vergleich Folgendes umfasst:

einen ersten Multiplexer, um zwischen dem Übertrag-Eingangssignal des ersten Schaltkreises und einem ersten Eingangssignal, das in den zweiten Schaltkreis eingegeben wird, auszuwählen;

einen zweiten Multiplexer, um zwischen dem Übertrag-Ausgangssignal des ersten Schaltkreises und einem zweiten Eingangssignal, das in den zweiten Schaltkreis eingegeben wird, auszuwählen;

ein Mittel zum Steuern des ersten und zweiten Multiplexers; und

ein Mittel zum Erzeugen der XOR-Funktion von Signalen, die von dem ersten und zweiten Multiplexer bereitgestellt werden.

17. Logikvorrichtung nach Anspruch 16, wobei das Mittel zum Erzeugen der XOR-Funktion von Signalen, die von den Multiplexern bereitgestellt werden, einen Kombinationsfunktionsgenerator umfasst.

18. Logikvorrichtung nach Anspruch 17, wobei das Mittel zum Erzeugen einen logischen Funktionsgenerator mit mindestens zwei Eingängen umfasst, wobei jede der Eingangsklemmen ein getrennter Eingang in den Funktionsgenerator ist.

19. Logikvorrichtung nach Anspruch 1 oder 2, wobei jeder Logikblock Folgendes umfasst:

ein Mittel zum Empfang eines ersten Eingangssignals und zum Anlegen des ersten Eingangssignals an der ersten Eingangsklemme;

ein Mittel zum Empfang eines zweiten Eingangssignals;

ein Mittel zum Auswählen, ob das zweite Eingangssignal, das Komplement des zweiten Eingangssignals oder ein konstanter Wert an die zweite Eingangsklemme angelegt werden soll.

20. Logikvorrichtung nach Anspruch 19, wobei das Mittel zum Auswählen Folgendes umfasst:

ein Mittel zum Ersetzen des zweiten Eingangssignals durch einen ersten konstanten Wert;

ein Mittel zum Steuern, ob das zweite Eingangssignal durch den ersten konstanten Wert ersetzt wird; und

ein Mittel zum Auswählen, ob der erste konstante Wert umgekehrt wird.

21. Logikvorrichtung nach einem der vorhergehenden Ansprüche, wobei jeder Logikblock eine Übertrag-Eingangsklemme und eine Übertrag-Ausgangsklemme aufweist und die Übertrag-Ausgangsklemme jedes Logikblocks an mindestens eine Übertrag-Eingangsklemme eines Logikblocks, die dem Logikblock vorangeht, und an die Übertrag-Eingangsklemme eines Logikblocks, der dem Logikblock folgt, angeschlossen ist.

22. Logikvorrichtung nach Anspruch 21, wobei die Logikblöcke in einer rechtwinkligen Anordnung von horizontalen Reihen und vertikalen Spalten angeordnet sind und der Logikblock, der jedem Logikblock vorangeht, und der Logikblock, der diesem folgt, in derselben Spalte oder in derselben Reihe wie jeder Logikblock angeordnet sind.

23. Logikvorrichtung nach Anspruch 21 oder 22, wobei der Logikblock, der jedem Logikblock vorangeht, und der Logikblock, der diesem folgt, benachbart zu jedem Logikblock angeordnet sind.

24. Logikvorrichtung nach Anspruch 1 oder 2, wobei jeder Logikblock mindestens eine erste Stufe (F-Stufe) und eine zweite Stufe (G-Stufe) umfasst und jede Stufe Folgendes umfasst:

mindestens eine erste Eingangsklemme und eine zweite Eingangsklemme;

eine Übertrag-Eingangsklemme;

eine Übertrag-Ausgangsklemme;

einen zweckbestimmten Schaltkreis zur Ausführung einer Übertrag-Logik mit mindestens drei Eingängen und mindestens einem Ausgang;

wobei die drei Eingänge oder drei der mindestens drei Eingänge Folgendes umfassen:

ein Signal an der ersten Eingangsklemme;

ein Signal an der zweiten Eingangsklemme; und

ein Signal an der Übertrag-Eingangsklemme,

wobei die Ausgabe eine Übertrag-Funktion der drei Eingaben darstellt.

**25.** Logikvorrichtung nach Anspruch 24, wobei die Übertrag-Ausgangsklemme der ersten Stufe direkt an die Übertrag-Eingangsklemme der zweiten Stufe angeschlossen ist und die Übertrag-Ausgangsklemme eines der Logikblöcke durch ein Puffermittel an die Übertrag-Eingangsklemme eines anderen der Logikblöcke angeschlossen ist.

**26.** Logikvorrichtung nach Anspruch 1, 2 oder 25, wobei jeder Logikblock Folgendes umfasst:

ein steuerbares Mittel, um dem Signal an der Übertrag-Eingangsklemme wählbar zu ermöglichen, auf die Übertrag-Ausgangsklemme fortzuschreiten; oder

dem Signal an der oder einer der ersten Eingangsklemmen und der zweiten Eingangsklemme zu ermöglichen, auf die Übertrag-Ausgangsklemme fortzuschreiten.

**27.** Logikvorrichtung nach Anspruch 1, 2 oder 25, wobei jeder Logikblock ein steuerbares Mittel umfasst, um der Übertrag-Ausgangsklemme ein gespeichertes Signal bereitzustellen.

**28.** Logikvorrichtung nach Anspruch 1, 2 oder 25, wobei jeder Logikblock eine dritte Eingangsklemme und ein steuerbares Mittel umfasst, um ein Signal an der dritten Eingangsklemme wählbar zu veranlassen, zu der Übertrag-Ausgangsklemme fortzuschreiten.

**29.** Logikvorrichtung nach Anspruch 25, wobei jeder Logikblock ein steuerbares Mittel umfasst, um dem Signal an der Übertrag-Eingangsklemme wählbar zu ermöglichen, unabhängig von Signalen an der ersten und zweiten Eingangsklemme zu der Übertrag-Ausgangsklemme fortzuschreiten.

**30.** Logikvorrichtung nach Anspruch 25, wobei jeder Logikblock ein zweites Mittel zur Berechnung der Übertrag-Funktion des Signals an der ersten Eingangsklemme, des Signals an der Übertrag-Eingangsklemme und eines Komplements des Signals an der zweiten Eingangsklemme und ein Mittel zum Auswählen, ob das erste Mittel oder das zweite Mittel verwendet wird, umfasst.

**31.** Logikvorrichtung nach Anspruch 1 oder 2, die des Weiteren ein Mittel umfasst, das der Vorrichtung ermöglicht, als Addierer oder Substrahierer zu wirken.

**32.** Logikvorrichtung nach Anspruch 1 oder 2 mit einer Schaltkreiskonstruktion, die zweckbestimmte Verbindungsleitungen aufweist, um die Hardware zur Ausführung der Übertrag-Funktion in einem ersten Logikblock mit Hardware zur Ausführung der Übertrag-Funktion in mindestens einem zweiten Logikblock zu verbinden.

**33.** Logikvorrichtung nach Anspruch 32, wobei die zweckbestimmten Verbindungsleitungen Leitungen umfassen, um die Hardware zur Ausführung der Übertrag-Funktion in einem ersten Logikblock mit Hardware zur Ausführung der Übertrag-Funktion in mindestens einem dritten Logikblock zu verbinden.

**34.** Logikvorrichtung nach Anspruch 33 mit einer Schaltkreiskonstruktion, die programmierbare Verbindungsleitungen umfasst, wobei die Hardware zur Ausführung der Übertrag-Funktion Folgendes umfasst:

ein Mittel zum Auswählen des Übertrag-Eingangssignals des dritten Logikblocks aus mindestens Übertrag-Ausgangssignalen an den Übertrag-Ausgangsklemmen des ersten und zweiten Logikblocks.

**35.** Logikvorrichtung nach Anspruch 33 oder 34, wobei die Logikblöcke in Reihen und Spalten in der integrierten Schaltkreiskonstruktion angeordnet sind und der dritte Logikblock benachbart zu dem ersten und zweiten Logikblock angeordnet ist.

**36.** Logikvorrichtung nach Anspruch 35, wobei der erste Logikblock in derselben Reihe angeordnet ist wie der dritte Logikblock und der zweite Logikblock in derselben Spalte angeordnet ist wie der dritte Logikblock.

**37.** Logikvorrichtung nach Anspruch 33 oder 34, wobei die Logikblöcke in Reihen und Spalten angeordnet sind und der erste und zweite Logikblock in derselben Reihe oder derselben Spalte angeordnet sind wie der dritte Logikblock.

**Revendications**

1. Dispositif logique programmable comprenant un réseau de blocs logiques, chaque bloc logique ayant au moins un circuit comprenant :

   une première borne d'entrée (A) et une deuxième borne d'entrée (B) ;
   une borne d'entrée de report (Ci-1) et une borne de sortie de report (Ci) ;
   un premier moyen de commutation (T102) pour connecter la première borne d'entrée (A) à la borne de sortie de report (Ci) ;
   un deuxième moyen de commutation ([101) pour connecter la borne d'entrée de report (Ci-1) à la borne de sortie de report (Ci) ;
   un premier moyen de commande (N201, X101, X103, I104) pour inciter le premier moyen de commutation (T102) à connecter la première borne d'entrée (A) à la borne de sortie de report (Ci) quand et seulement quand une valeur logique d'un signal sur la première borne d'entrée (A) est égale à une valeur logique d'un signal sur la deuxième borne d'entrée (B), et pour inciter le deuxième moyen de commutation (T101) à connecter la borne d'entrée de report (Ci-1) à la borne de sortie de report (Ci) quand et seulement quand la valeur logique d'un signal sur la première borne d'entrée (A) n'est pas égale à la valeur logique d'un signal sur la deuxième borne d'entrée (B) ;
   un deuxième moyen de commande (CL2, CL3) pour inciter le deuxième moyen de commutation (T101) à connecter la borne d'entrée de report (Ci-1) à la borne de sortie de report (ci) quand cela est désiré ;
   les blocs logiques comportant en outre des générateurs de fonctions (F) pour calculer une fonction sélectionnable d'une pluralité de fonctions d'une pluralité de signaux d'entrée (F1, F2, F3, F4, Ci-1), les signaux d'entrée étant dérivés au moins de la première borne d'entrée (A), de la deuxième borne d'entrée (B) et de la borne d'entrée de report (Ci-1).

2. Dispositif logique programmable selon la revendication 1, dans lequel les blocs logiques sont configurables et dans lequel le premier moyen de commutation, le deuxième moyen de commutation, et le premier moyen de commande sont réalisés en matériel dédié.

3. Dispositif logique selon la revendication 1 ou 2, dans lequel le moyen de commande comprend :

   un inverseur, et une porte OU EXCLUSIF avec au moins deux entrées et une sortie ;
   dans lequel les première (A) et deuxième (B) bornes d'entrée sont des entrées de la porte OU EXCLUSIF ;
   la sortie de la porte OU EXCLUSIF est connectée à l'entrée de l'inverseur ;
   la sortie de signal de l'inverseur commande le premier moyen de commutation ; et
   la sortie de signal de la porte OU EXCLUSIF commande le deuxième moyen de commutation.

4. Dispositif logique selon la revendication 3, dans lequel chaque bloc logique comporte

   une troisième borne d'entrée (F3) et un moyen pour sélectionner l'autre signal à partir d'une valeur mémorisée et un signal sur la troisième borne d'entrée.

5. Dispositif logique selon la revendication 1 ou 2, dans lequel le bloc logique comporte:

   une troisième borne d'entrée (F3), un moyen pour fournir un signal sur la troisième borne d'entrée, et un moyen (CL4, T200, T201) pour sélectionner entre inciter le premier moyen de commutation (T102) à connecter la première borne d'entrée (A) à la borne de sortie de report (Ci) ou inciter le premier moyen de commutation à appliquer le signal se trouvant sur la troisième borne d'entrée à la borne de sortie de report (Ci).

6. Dispositif logique selon la revendication 5, dans lequel chaque bloc logique comprend un moyen (CL5) pour sélectionner entre appliquer une valeur mémorisée à la borne de sortie de report (Ci) ou appliquer un signal d'entrée à la borne de sortie de report.

7. Dispositif logique selon la revendication 1 ou 2, dans lequel chaque bloc logique comprend un moyen pour inverser ou non inverser un signal afin de générer un opérande, et un moyen pour appliquer l'opérande à la deuxième borne d'entrée (B).

8. Dispositif logique selon la revendication 1 ou 2, dans lequel chaque bloc logique comprend :

une porte NON OU EXCLUSIF (X103);
un premier (1104) et un deuxième inverseur ;
des troisième et quatrième moyens de commutation contrôlables ; et
une première (CL2) et une deuxième (CL3) cellule de mémoire, chaque cellule de mémoire ayant une sortie et un complément de sortie ;
dans lequel les première (A) et deuxième (B) bornes d'entrée sont des entrées de la porte NON OU EXCLUSIF (X103),
une sortie de la porte NON OU EXCLUSIF (X103) est entrée dans le premier inverseur (I104) par le troisième moyen de commutation,
la sortie du premier inverseur (I104) est une entrée du deuxième inverseur,
le complément de sortie de la première cellule de mémoire (CL2) est entré dans le premier inverseur (I104) par le quatrième moyen de commutation,
le premier moyen de commutation (T102) est commandé par le signal de sortie du deuxième inverseur,
le deuxième moyen de commutation (T101) est commandé par 1e signal de sortie du premier inverseur (I104),
le troisième moyen de commutation est commandé par la sortie de la deuxième cellule de mémoire (CL3), et
le quatrième moyen de commutation est commandé par ledit complément de sortie de la deuxième cellule de mémoire (CL3).

9. Dispositif logique selon la revendication 8, dans lequel les cellules de mémoire (CL2, CL3) sont des cellules de mémoire vive statique, des commutateurs programmables électriquement, des commutateurs programmables électriquement effaçables électriquement, des fusibles ou des antifusibles.

10. Dispositif logique selon la revendication 1 ou 2, dans lequel chaque bloc logique a un multiplexeur à trois voies (M) pour sélectionner entre inciter le premier moyen de commutation (T102) à connecter la première borne d'entrée (A) à la borne de sortie de report (Ci), inciter le premier moyen de commutation (T102) à connecter une troisième borne d'entrée à la borne de sortie de report (Ci), ou inciter le premier moyen de commutation (T102) à appliquer une valeur mémorisée à la borne de sortie de report (Ci).

11. Dispositif logique selon la revendication 1 ou 2, dans lequel chaque bloc logique a :

un troisième signal d'entrée (F3) ;
un moyen pour fournir une valeur mémorisée ;
des troisième (T201), quatrième (T200), cinquième (T203) et sixième (T202) moyens de commutation contrôlables ; et
un moyen pour commander les troisième, quatrième, cinquième et sixième moyens de commutation contrôlables de telle sorte que :

la troisième borne d'entrée (F3) soit couplée à la borne de sortie de report (Ci) seulement quand les premier (T102), troisième (T201) et cinquième (T203) moyens de commutation conduisent ;
la valeur mémorisée soit couplée à la borne de sortie de report (Ci) seulement quand les sixième (T202) et le premier moyen de commutation (T102) conduisent ; et
la première borne d'entrée (A) soit couplée à la borne de sortie de report (Ci) seulement quand les quatrième et premier (T102) moyens de commutation conduisent.

12. Dispositif logique selon la revendication 1 ou 2, dans lequel le moyen de commande comprend :

une porte NON OU EXCLUSIF ayant deux bornes d'entrée couplée respectivement à la première (A) et à la deuxième (B) bornes de signal d'entrée, et une borne de sortie ;
un premier inverseur (I104), la sortie du premier inverseur commandant le deuxième moyen de commutation (T101) ;
un moyen pour fournir une valeur mémorisée ;
un troisième moyen de commutation (CL3), dans lequel le troisième moyen de commutation sélectionne entre fournir la valeur mémorisée ou fournir un signal sorti de la porte NON OU EXCLUSIF à la borne d'entrée du premier inverseur ; et

un deuxième inverseur connecté à la borne de sortie du premier inverseur, la borne de sortie du deuxième inverseur commandant le premier moyen de commutation (T102).

**13.** Dispositif logique selon la revendication 1 ou 2, dans lequel chaque bloc de logique comprend :

une porte NON OU EXCLUSIF (X101) ;
un première cellule de mémoire (CL0) et une deuxième cellule de mémoire (CL1) ;
un multiplexeur (M2) avec au moins deux entrées et une sortie ;
une troisième borne d'entrée (F3) ;
dans lequel la sortie de la première cellule de mémoire est une entrée du multiplexeur (M2) ;
la troisième borne d'entrée (F3) est une entrée du multiplexeur (M2) ;
la sortie de la deuxième cellule de mémoire sélectionne entre connecter la première cellule de mémoire ou connecter la troisième cellule de mémoire à la borne de sortie du multiplexeur (M2) ;
la sortie du multiplexeur est une entrée de la porte NON OU EXCLUSIF (X101) ;
la deuxième borne d'entrée (B) est couplée une entrée de la porte NON OU EXCLUSIF (X101) ; et
la porte NON OU EXCLUSIF et la première borne d'entrée commandent le moyen d'incitation.

**14.** Dispositif logique selon la revendication 1 ou 2, dans lequel chaque bloc logique comporte au moins :

un premier circuit et un deuxième circuit, la borne de sortie de report du premier circuit étant connectée à la borne d'entrée de report du deuxième circuit, la borne de sortie de report du deuxième circuit étant couplée à une borne de sortie de report du bloc logique ;
au moins une borne d'entrée de report de bloc logique ; et
un moyen pour utiliser un signal sur la borne d'entrée de report du bloc logique ou sur une des bornes d'entrée de report du bloc logique comme signal d'entrée de report sur la borne d'entrée de report du premier circuit.

**15.** Dispositif logique selon la revendication 14, dans lequel le deuxième circuit comprend un moyen pour comparer un signal sur la borne de sortie de report du premier circuit au signal d'entrée de report sur le premier circuit, le moyen étant utile pour détecter une condition de dépassement positif.

**16.** Dispositif logique selon la revendication 15, dans lequel le moyen pour comparer comprend :

un premier multiplexeur pour sélectionner entre le signal d'entrée de report du premier circuit ou un premier signal d'entrée pour le deuxième circuit ;
un deuxième multiplexeur pour sélectionner entre le signal de sortie de report du premier circuit ou un deuxième signal d'entrée pour le deuxième circuit ;
un moyen pour commander les premier et deuxième multiplexeurs ; et
un moyen pour générer la fonction OU EXCLUSIF de signaux fournis par les premier et deuxième multiplexeurs.

**17.** Dispositif logique selon la revendication 16, dans lequel le moyen pour générer la fonction OU EXCLUSIF de signaux fournis par les multiplexeurs comprend un générateur de fonctions combinatoires.

**18.** Dispositif logique selon la revendication 17, dans lequel le moyen pour générer comprend un générateur de fonctions logiques avec au moins deux entrées, dans lequel chacune des bornes d'entrée est une entrée séparée du générateur de fonctions.

**19.** Dispositif logique selon la revendication 1 ou 2, dans lequel chaque bloc logique comprend :

un moyen pour recevoir un premier signal d'entrée et placer le premier signal d'entrée sur ladite première borne d'entrée ;
un moyen pour recevoir un deuxième signal d'entrée ;
un moyen pour sélectionner entre placer le deuxième signal d'entrée, le complément du deuxième signal d'entrée, ou une valeur constante sur la deuxième borne d'entrée.

**20.** Dispositif logique selon la revendication 19, dans lequel le moyen pour sélectionner comprend :

un moyen pour remplacer le deuxième signal d'entrée par une première valeur constante ;

un moyen pour commander si le deuxième signal d'entrée sera remplacé par la première valeur constante ; et un moyen pour sélectionner si 1a première valeur constante doit être inversée.

21. Dispositif logique selon l'une quelconque des revendications précédentes, dans lequel chaque bloc logique a une borne d'entrée de report et une borne de sortie de report, et la borne de sortie de report de chaque bloc logique est couplée à au moins une borne d'entrée de report d'un bloc logique précédant le bloc logique et à la borne d'entrée de report d'un bloc logique suivant le bloc logique.

22. Dispositif logique selon la revendication 21, dans lequel les blocs logiques sont positionnés en un réseau rectangulaire de rangées horizontales et de colonnes verticales et dans lequel le bloc logique précédant chaque bloc logique et le bloc logique le suivant sont positionnés dans la même colonne ou dans la même rangée que chaque dit bloc logique.

23. Dispositif logique selon la revendication 21 ou 22, dans lequel le bloc logique précédant chaque bloc logique et le bloc logique le suivant sont contigus à chaque dit bloc logique.

24. Dispositif logique selon la revendication 1 ou 2, dans lequel chaque bloc logique comprend au moins un premier étage (étage F) et un deuxième étage (étage G), et dans lequel chaque étage comprend :

au moins une première borne d'entrée et une deuxième borne d'entrée ;
une borne d'entrée de report ;
une borne de sortie de report ;
des circuits dédiés pour exécuter une logique de report avec au moins trois entrées et au moins une sortie ;
dans lequel les trois entrées ou trois des au moins trois entrées comprennent :

un signal sur la première borne d'entrée ;
un signal sur la deuxième borne d'entrée ; et
un signal sur la borne d'entrée de report,

dans lequel la sortie est une fonction de report des trois entrées.

25. Dispositif logique selon la revendication 24, dans lequel la borne de sortie de report du premier étage est connectée directement à la borne d'entrée de report du deuxième étage, et la borne de sortie de report de l'un des blocs logiques est connectée par un moyen de tamponnage à la borne d'entrée de report d'un autre des blocs logiques.

26. Dispositif logique selon la revendication 1, 2, ou 25, dans lequel chaque bloc logique comprend :

un moyen contrôlable pour permettre sélectivement au signal se trouvant sur la borne d'entrée de report de passer jusqu'à la borne de sortie de report ; ou
permettre au signal se trouvant sur la ou une des premières bornes d'entrée et la deuxième borne d'entrée de passer jusqu'à ladite borne de sortie de report.

27. Dispositif logique selon la revendication 1, 2 ou 25, dans lequel chaque bloc logique comprend un moyen contrôlable pour fournir un signal mémorisé à la borne de sortie de report.

28. Dispositif logique selon la revendication 1,2 ou 25, dans lequel chaque bloc logique comprend une troisième borne d'entrée et un moyen contrôlable pour inciter sélectivement un signal se trouvant sur la troisième borne d'entrée à passer jusqu'à la borne de sortie de report.

29. Dispositif logique selon la revendication 25, dans lequel chaque bloc logique comprend un moyen contrôlable pour permettre sélectivement au signal se trouvant sur la borne d'entrée de report de passer jusqu'à la borne de sortie de report indépendamment des signaux se trouvant sur les première et deuxième bornes d'entrée.

30. Dispositif logique selon la revendication 25, dans lequel chaque bloc logique comprend un deuxième moyen pour calculer la fonction de report du signal se trouvant sur la première borne d'entrée, du signal se trouvant sur la borne d'entrée de report, et d'un complément du signal se trouvant sur la deuxième borne d'entrée, et un moyen pour sélectionner entre utiliser le premier moyen ou utiliser ledit deuxième moyen.

**31.** Dispositif logique selon la revendication 1 ou 2, et comprenant en outre un moyen pour permettre au dispositif de fonctionner comme un additionneur ou un soustracteur.

**32.** Dispositif logique selon la revendication 1 ou 2, ayant une structure de circuit comprenant des lignes d'interconnexion dédiées pour interconnecter le matériel servant à effectuer la fonction de report dans un premier bloc logique à un matériel servant à effectuer la fonction de report dans au moins un deuxième bloc logique.

**33.** Dispositif logique selon la revendication 32, dans lequel les lignes d'interconnexion dédiées comprennent des lignes pour interconnecter le matériel servant à effectuer la fonction de report dans un premier bloc logique à un matériel servant à effectuer la fonction de report dans au moins un troisième bloc logique.

**34.** Dispositif logique selon la revendication 33, ayant une structure de circuit comprenant des lignes d'interconnexion dédiées, dans lequel le matériel servant à effectuer la fonction de report comprend ;

un moyen pour sélectionner le signal d'entrée de report du troisième bloc logique parmi au moins les signaux de sortie de report se trouvant sur les bornes de sortie de report des premier et deuxième blocs logiques.

**35.** Dispositif logique selon la revendication 33 ou 34, dans lequel les blocs logiques sont disposés en rangées et en colonnes dans la structure de circuit intégré, et le troisième bloc logique est positionné en contiguïté avec les premier et deuxième blocs logiques.

**36.** Dispositif logique selon la revendication 35, dans lequel le premier bloc logique est positionné dans la même rangée que le troisième bloc logique et le deuxième bloc logique est positionné dans la même colonne que le troisième bloc logique.

**37.** Dispositif logique selon la revendication 33 ou 34, dans lequel les blocs logiques sont disposés en rangées et en colonnes, et les premier et deuxième blocs logiques sont positionnés dans la même rangée ou les mêmes colonnes que le troisième bloc logique.

$C_{i-1}$

$A_i$

$B_i$

$S_i$

$G_i$   $C_i$   $P_i$

**FIG. 1a**
**(Prior Art)**

$C_{i-1}$

$A_i$

$B_i$

FULL
ADDER

$S_i$

$G_i$   $C_i$   $P_i$

Schematic Symbol For Full Adder

**FIG. 1b**
**(Prior Art)**

24

FIG. 2
(Prior Art)

ADDER | CARRY RESTORER

FIG. 3
(Prior Art)

FIG. 4
PRIOR ART

UP/$\overline{\text{DOWN}}$

G

Count Enable
IN
(carry)

F

X

Count Enable
OUT

CLB1

D    Q

Y

$Q_0$

(PRIOR ART)
FIG. 5

$C_{OUT}$

T1

51

A

B

T2

$C_{IN}$

**FIG. 6**

| | A | B | $C_{IN}$ | $C_{OUT}$ |
|---|---|---|---|---|
| 1 | 0 | 0 | 0 | 0 |
| 2 | 0 | 0 | 1 | 0 |
| 3 | 0 | 1 | 0 | 0 |
| 4 | 1 | 0 | 0 | 0 |
| 5 | 0 | 1 | 1 | 1 |
| 6 | 1 | 0 | 1 | 1 |
| 7 | 1 | 1 | 0 | 1 |
| 8 | 1 | 1 | 1 | 1 |

**FIG. 7**

FIG. 8

FIGURE 9

EP 1 046 982 B1

BLOCK 1

Carry In$_T$

Carry Out

Carry In$_B$

CLB

BLOCK 2

Carry In$_T$

Carry Out

Carry In$_B$

CLB

L112

BLOCK 3

Carry In$_T$

Carry Out

Carry In$_B$

CLB

BLOCK 4

Carry In$_T$

Carry Out

Carry In$_B$

CLB

L113

FIG. 10

General Purpose
Programmable Interconnect

CLB
11-1

$C_{TT}$

$C_O$

$C_{IB}$

M11-1

11-a

M11-2

CLB
11-2

$C_{IT}$

$C_O$

$C_{IB}$

M11-3

CLB
11-3

$C_{TT}$

$C_O$

$C_{IB}$

FIG. 11

FIG. 12

Fig. 9b
Prior Art

Fig. 9c
Prior Art

Fig. 9a
Prior Art

Fig. 9d
Prior Art

35